# EUROPEAN PATENT APPLICATION

(11) **EP 4 514 004 A1**
(43) Date of publication of application: **26.02.2025**
(21) Application number: 23791345.4
(22) Date of filing: 21.04.2023
(51) Int. Cl.: H04W 72/04

(54) **INFORMATION TRANSMISSION METHOD AND APPARATUS, NETWORK DEVICE AND TERMINAL**

(30) Priority: 22.04.2022 CN 202210432357; 12.08.2022 CN 202210969378
(71) Applicant: Datang Mobile Communications Equipment Co., Ltd., Beijing 100085 (CN)
(72) Inventor: LI, Hui, Beijing 100085 (CN); GAO, Qiubin, Beijing 100085 (CN); HUANG, Qiuping, Beijing 100085 (CN); SONG, Lei, Beijing 100085 (CN); LUO, Yajuan, Beijing 100085 (CN)
(74) Representative: Studio Torta S.p.A.
(86) International application number: PCT/CN2023/089735
(87) International publication number: WO 2023/202693

(57) **Abstract**

The present disclosure provides an information transmission method and apparatus, a network device and a terminal. The information transmission method comprises: determining at least one TCI state value corresponding to at least one resource or at least one resource group; and transmitting first information to the terminal according to the at least one TCI state value, wherein the first information comprises first indication signaling, and the first indication signaling is used for indicating a TCI state value used by the resource or the resource group.

## Description

### CROSS-REFERENCE TO RELATED APPLICATION

This application claims the priority of Chinese Patent Application No. No. 202210432357.1 filed in China on April, 22 2022 and the priority of Chinese Patent Application No. 202210969378.7 filed in China on August 12, 2022, the disclosure of which are incorporated herein by reference in their entirety.

### TECHNICAL FIELD

The present disclosure relates to the field of communications technologies, and in particular, to an information transmission method, an information transmission apparatus, a network device, and a terminal.

### BACKGROUND

Currently, in order to solve the problem of current independent beam indication, the complexity of the system and the signaling indication overhead are increased, and a method of indicating a plurality of channel beams by using one beam indication signaling is introduced, which activates a set of transmission configuration indicator (TCI) states by using a Media Access Control (MAC)-Control Element (CE), and then uses Downlink Control Information (DCI) to indicate one of the activated TCI states. However, when the Transmission and Reception Point (TRP) transmission is indicated, the beam indication signaling needs to indicate beams of different TRPs (corresponding to different links); how to use the beam indication signaling to indicate multi-TRP transmission cannot be supported at present.

In the above, there is a problem that an information transmission scheme for multi-TRP transmission cannot be implemented in the related art.

### SUMMARY

An objective of the present disclosure is to provide an information transmission method and apparatus, a network device, and a terminal, to resolve a problem in the related art that an information transmission scheme for multi-TRP transmission cannot be supported.

In order to address the above technical problem, an information transmission method applied to a network device is provided. The method includes: determining at least one TCI state value corresponding to at least one resource or at least one resource group; and transmitting first information to a terminal according to the at least one TCI state value; wherein the first information includes first indication signaling; the first indication signaling is configured to indicate a TCI state value used by a resource or a resource group.

Optionally, the determining at least one TCI state value corresponding to at least one resource or at least one resource group includes: configuring the at least one TCI state value corresponding to the at least one resource or the at least one resource group; or determining the at least one TCI state value corresponding to the at least one resource or the at least one resource group according to first predefined information.

Optionally, the first predefined information includes at least one of following: a correspondence between one resource and another resource; or a correspondence between one resource group and another resource group; or a correspondence between one TCI state value indication and another TCI state value indication in TCI state information; or a correspondence between a resource or a resource group and TCI state information; or a correspondence between a first parameter identifier and TCI state information; or a correspondence between a resource or a resource group and a first parameter identifier; wherein the first parameter identifier is configured to identify a resource or a resource group.

Optionally, the first information further includes a first correspondence, or the first indication signaling carries a first correspondence; wherein the first correspondence includes at least one of: a correspondence between a resource or a resource group and TCI state information, a correspondence between a first parameter identifier and TCI state information, or a correspondence between a resource or a resource group and a first parameter identifier; the first parameter identifier is configured to identify a resource or a resource group.

Optionally, the correspondence between the resource or the resource group and the TCI state information includes: first sub-relationship between the resource or the resource group and the TCI state value indication; and/or the correspondence between the first parameter identifier and the TCI state information includes: second sub-relationship between the first parameter identifier and a TCI state value indication; wherein the TCI state value indication is configured to identify the TCI state information.

Optionally, the method further includes: determining a beam direction corresponding to the at least one resource or the at least resource group based on second predefined information.

Optionally, the second predefined information includes at least one of: a beam direction of a synchronization signal block (SSB) determined when a terminal performs cell access, a beam direction of a physical uplink shared channel (PUSCH), or a predefined TCI state value.

Optionally, the method further includes: determining a resource or resource group corresponding to at least one predefined control resource set CORESET group index; performing uplink transmission and/or downlink transmission of the determined resource or resource group according to the beam direction.

Optionally, the first parameter identifier includes at least one of: a control resource set CORESET group index, a CORESET index, a sounding reference signal SRS resource set index, a physical uplink shared channel PUSCH transmission occasion, or a maximum antenna port number index of a panel.

Optionally, transmitting the first correspondence to the terminal includes at least one of following: transmitting TCI state information indicated or configured for at least one resource or at least one resource group to the terminal; or transmitting a resource or resource group or a first parameter identifier corresponding to the TCI state information to the terminal; or indicating the TCI state information corresponding to a scheduled resource to the terminal through a resource scheduling signaling.

Optionally, the TCI state information includes at least one TCI state value indication.

Optionally, the first indication signaling includes: at least one transmission reception point TRP information field; the TRP information field is configured to indicate at least one of: single-TRP transmission or multi-TRP transmission, or a TCI state value indication used during single-TRP transmission.

Optionally, the TRP information field is configured to indicate all of channels and/or signals, or indicate a part of channels and/or signals.

Optionally, the first indication signaling includes an indication field of at least one TCI state value.

Optionally, the resource includes at least one of following: a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of following: CORESET grouping, PDCCH grouping, PUCCH grouping, CSI-RS grouping, or SRS grouping.

An information transmission method applied to a terminal is provided. The method includes: receiving first information from a network device; determining at least one TCI state value corresponding to at least one resource or at least one resource group according to the first information; and performing information transmission according to the at least one TCI state value; wherein the first information includes first indication signaling; the first indication signaling is configured to indicate a TCI state value used by a resource or a resource group.

Optionally, determining the at least one TCI state value corresponding to the at least one resource or the at least one resource group according to the first information includes: determining the at least one TCI state value corresponding to the at least one resource or the at least one resource group according to the first information and first predefined information.

Optionally, the first predefined information includes at least one of following: a correspondence between one resource and another resource; or a correspondence between one resource group and another resource group; or a correspondence between one TCI state value indication and another TCI state value indication in TCI state information; or a correspondence between a resource or a resource group and TCI state information; or a correspondence between a first parameter identifier and TCI state information; or a correspondence between a resource or a resource group and a first parameter identifier; wherein the first parameter identifier is configured to identify a resource or a resource group.

Optionally, the first information further includes a first correspondence, or the first indication signaling carries a first correspondence; wherein the first correspondence includes at least one of: a correspondence between a resource or a resource group and TCI state information, a correspondence between a first parameter identifier and TCI state information, or a correspondence between a resource or a resource group and a first parameter identifier; the first parameter identifier is configured to identify a resource or a resource group.

Optionally, the correspondence between the resource or the resource group and the TCI state information includes: first sub-relationship between the resource or the resource group and the TCI state value indication; and/or the correspondence between the first parameter identifier and the TCI state information includes: second sub-relationship between the first parameter identifier and a TCI state value indication; wherein the TCI state value indication is configured to identify the TCI state information.

Optionally, the method further includes: determining a beam direction corresponding to the at least one resource or the at least resource group based on second predefined information.

Optionally, the second predefined information includes at least one of: a beam direction of a synchronization signal block (SSB) determined when a terminal performs cell access, a beam direction of a physical uplink shared channel (PUSCH), or a predefined TCI state value..

Optionally, the method further includes: determining a resource or resource group corresponding to at least one predefined control resource set CORESET group index; performing uplink transmission and/or downlink transmission of the determined resource or resource group according to the beam direction.

Optionally, the first parameter identifier includes at least one of: a control resource set CORESET group index, a CORESET index, a sounding reference signal SRS resource set index, a physical uplink shared channel PUSCH transmission occasion, or a maximum antenna port number index of a panel.

Optionally, receiving the first correspondence from the network device includes at least one of following: receiving TCI state information that is from a network device and is indicated or configured for at least one resource or at least one resource group; or receiving, from the network device, TCI state information indicated or configured for at least one resource or at least one resource group; or receiving, from the network device, a resource or resource group or a first parameter identifier corresponding to the TCI state information; or receiving, from the network device, the TCI state information corresponding to a scheduled resource through a resource scheduling signaling.

Optionally, the TCI state information includes at least one TCI state value indication.

Optionally, the first indication signaling includes: at least one transmission reception point TRP information field; the TRP information field is configured to indicate at least one of: single-TRP transmission or multi-TRP transmission, or a TCI state value indication used during single-TRP transmission.

Optionally, the TRP information field is configured to indicate all of channels and/or signals, or indicate a part of channels and/or signals.

Optionally, the first indication signaling includes an indication field of at least one TCI state value.

Optionally, the resource includes at least one of following: a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of following: CORESET grouping, PDCCH grouping, PUCCH grouping, CSI-RS grouping, or SRS grouping.

A network device is further provided. The network device includes: a memory, a transceiver, and a processor, wherein the memory is configured to store a computer program; the transceiver is configured to transmit and receive data under the control of the processor; and the processor is configured to read the computer program in the memory and perform the following operations: determining at least one TCI state value corresponding to at least one resource or at least one resource group; transmitting first information to a terminal through the transceiver according to the at least one TCI state value; wherein the first information includes first indication signaling; the first indication signaling is configured to indicate a TCI state value used by a resource or a resource group.

Optionally, the determining at least one TCI state value corresponding to at least one resource or at least one resource group includes: configuring the at least one TCI state value corresponding to the at least one resource or the at least one resource group; or determining the at least one TCI state value corresponding to the at least one resource or the at least one resource group according to first predefined information.

Optionally, the first predefined information includes at least one of following: a correspondence between one resource and another resource; or a correspondence between one resource group and another resource group; or a correspondence between one TCI state value indication and another TCI state value indication in TCI state information; or a correspondence between a resource or a resource group and TCI state information; or a correspondence between a first parameter identifier and TCI state information; or a correspondence between a resource or a resource group and a first parameter identifier; wherein the first parameter identifier is configured to identify a resource or a resource group.

Optionally, the first information further includes a first correspondence, or the first indication signaling carries a first correspondence; wherein the first correspondence includes at least one of: a correspondence between a resource or a resource group and TCI state information, a correspondence between a first parameter identifier and TCI state information, or a correspondence between a resource or a resource group and a first parameter identifier; the first parameter identifier is configured to identify a resource or a resource group.

Optionally, the correspondence between the resource or the resource group and the TCI state information includes: first sub-relationship between the resource or the resource group and the TCI state value indication; and/or the correspondence between the first parameter identifier and the TCI state information includes: second sub-relationship between the first parameter identifier and a TCI state value indication; wherein the TCI state value indication is configured to identify the TCI state information.

Optionally, the operations further include: determining a beam direction corresponding to the at least one resource or the at least resource group based on second predefined information.

Optionally, the second predefined information includes at least one of: a beam direction of a synchronization signal block (SSB) determined when a terminal performs cell access, a beam direction of a physical uplink shared channel (PUSCH), or a predefined TCI state value.

Optionally, the operations further include: determining a resource or resource group corresponding to at least one predefined control resource set CORESET group index; performing uplink transmission and/or downlink transmission of the determined resource or resource group according to the beam direction.

Optionally, the first parameter identifier includes at least one of: a control resource set CORESET group index, a CORESET index, a sounding reference signal SRS resource set index, a physical uplink shared channel PUSCH transmission occasion, or a maximum antenna port number index of a panel.

Optionally, transmitting the first correspondence to the terminal includes at least one of following: transmitting TCI state information indicated or configured for at least one resource or at least one resource group to the terminal; or transmitting a resource or resource group or a first parameter identifier corresponding to the TCI state information to the terminal; or indicating the TCI state information corresponding to a scheduled resource to the terminal through a resource scheduling signaling.

Optionally, the TCI state information includes at least one TCI state value indication.

Optionally, the first indication signaling includes: at least one transmission reception point TRP information field; the TRP information field is configured to indicate at least one of: single-TRP transmission or multi-TRP transmission, or a TCI state value indication used during single-TRP transmission.

Optionally, the TRP information field is configured to indicate all of channels and/or signals, or indicate a part of channels and/or signals.

Optionally, the first indication signaling includes an indication field of at least one TCI state value.

Optionally, the resource includes at least one of following: a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of following: CORESET grouping, PDCCH grouping, PUCCH grouping, CSI-RS grouping, or SRS grouping.

A terminal is provided in the present application. The terminal includes a memory, a transceiver, and a processor: wherein the memory is configured to store a computer program; the transceiver is configured to transmit and receive data under the control of the processor; and the processor is configured to read the computer program in the memory and perform the following operations: receiving first information from a network device through the transceiver; determining at least one TCI state value corresponding to at least one resource or at least one resource group according to the first information; performing information transmission according to the at least one TCI state value; wherein the first information includes first indication signaling; the first indication signaling is configured to indicate a TCI state value used by a resource or a resource group.

Optionally, determining the at least one TCI state value corresponding to the at least one resource or the at least one resource group according to the first information includes: determining the at least one TCI state value corresponding to the at least one resource or the at least one resource group according to the first information and first predefined information.

Optionally, the first predefined information includes at least one of following: a correspondence between one resource and another resource; or a correspondence between one resource group and another resource group; or a correspondence between one TCI state value indication and another TCI state value indication in TCI state information; or a correspondence between a resource or a resource group and TCI state information; or a correspondence between a first parameter identifier and TCI state information; or a correspondence between a resource or a resource group and a first parameter identifier; wherein the first parameter identifier is configured to identify a resource or a resource group.

Optionally, the first information further includes a first correspondence, or the first indication signaling carries a first correspondence; wherein the first correspondence includes at least one of: a correspondence between a resource or a resource group and TCI state information, a correspondence between a first parameter identifier and TCI state information, or a correspondence between a resource or a resource group and a first parameter identifier; the first parameter identifier is configured to identify a resource or a resource group.

Optionally, the correspondence between the resource or the resource group and the TCI state information includes: first sub-relationship between the resource or the resource group and the TCI state value indication; and/or the correspondence between the first parameter identifier and the TCI state information includes: second sub-relationship between the first parameter identifier and a TCI state value indication; wherein the TCI state value indication is configured to identify the TCI state information.

Optionally, the operations further include: determining a beam direction corresponding to the at least one resource or the at least resource group based on second predefined information.

Optionally, the second predefined information includes at least one of: a beam direction of a synchronization signal block (SSB) determined when a terminal performs cell access, a beam direction of a physical uplink shared channel (PUSCH), or a predefined TCI state value..

Optionally, the operations further include: determining a resource or resource group corresponding to at least one predefined control resource set CORESET group index; performing uplink transmission and/or downlink transmission of the determined resource or resource group according to the beam direction.

Optionally, the first parameter identifier includes at least one of: a control resource set CORESET group index, a CORESET index, a sounding reference signal SRS resource set index, a physical uplink shared channel PUSCH transmission occasion, or a maximum antenna port number index of a panel.

Optionally, receiving the first correspondence from the network device includes at least one of following: receiving TCI state information that is from a network device and is indicated or configured for at least one resource or at least one resource group; or receiving, from the network device, TCI state information indicated or configured for at least one resource or at least one resource group; or receiving, from the network device, a resource or resource group or a first parameter identifier corresponding to the TCI state information; or receiving, from the network device, the TCI state information corresponding to a scheduled resource through a resource scheduling signaling.

Optionally, the TCI state information includes at least one TCI state value indication.

Optionally, the first indication signaling includes: at least one transmission reception point TRP information field; the TRP information field is configured to indicate at least one of: single-TRP transmission or multi-TRP transmission, or a TCI state value indication used during single-TRP transmission.

Optionally, the TRP information field is configured to indicate all of channels and/or signals, or indicate a part of channels and/or signals.

Optionally, the first indication signaling includes an indication field of at least one TCI state value.

Optionally, the resource includes at least one of following: a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of following: CORESET grouping, PDCCH grouping, PUCCH grouping, CSI-RS grouping, or SRS grouping.

An information transmission apparatus applied to a network device is provided. The apparatus includes: a first determining unit, configured to determine at least one TCI state value corresponding to at least one resource or at least one resource group; a first transmitting unit, configured to transmit first information to a terminal according to the at least one TCI state value; wherein the first information includes first indication signaling; the first indication signaling is configured to indicate a TCI state value used by a resource or a resource group.

Optionally, the determining at least one TCI state value corresponding to at least one resource or at least one resource group includes: configuring the at least one TCI state value corresponding to the at least one resource or the at least one resource group; or determining the at least one TCI state value corresponding to the at least one resource or the at least one resource group according to first predefined information.

Optionally, the first predefined information includes at least one of following: a correspondence between one resource and another resource; or a correspondence between one resource group and another resource group; or a correspondence between one TCI state value indication and another TCI state value indication in TCI state information; or a correspondence between a resource or a resource group and TCI state information; or a correspondence between a first parameter identifier and TCI state information; or a correspondence between a resource or a resource group and a first parameter identifier; wherein the first parameter identifier is configured to identify a resource or a resource group.

Optionally, the first information further includes a first correspondence, or the first indication signaling carries a first correspondence; wherein the first correspondence includes at least one of: a correspondence between a resource or a resource group and TCI state information, a correspondence between a first parameter identifier and TCI state information, or a correspondence between a resource or a resource group and a first parameter identifier; the first parameter identifier is configured to identify a resource or a resource group.

Optionally, the correspondence between the resource or the resource group and the TCI state information includes: first sub-relationship between the resource or the resource group and the TCI state value indication; and/or the correspondence between the first parameter identifier and the TCI state information includes: second sub-relationship between the first parameter identifier and a TCI state value indication; wherein the TCI state value indication is configured to identify the TCI state information.

Optionally, the apparatus further includes: a third determining unit, configured for determining a beam direction corresponding to the at least one resource or the at least resource group based on second predefined information.

Optionally, the second predefined information includes at least one of: a beam direction of a synchronization signal block (SSB) determined when a terminal performs cell access, a beam direction of a physical uplink shared channel (PUSCH), or a predefined TCI state value.

Optionally, the apparatus further includes: a fourth determining unit, configured for determining a resource or resource group corresponding to at least one predefined control resource set CORESET group index; a second transmitting unit, configured for performing uplink transmission and/or downlink transmission of the determined resource or resource group according to the beam direction.

Optionally, the first parameter identifier includes at least one of: a control resource set CORESET group index, a CORESET index, a sounding reference signal SRS resource set index, a physical uplink shared channel PUSCH transmission occasion, or a maximum antenna port number index of a panel.

Optionally, transmitting the first correspondence to the terminal includes at least one of following: transmitting TCI state information indicated or configured for at least one resource or at least one resource group to the terminal; or transmitting a resource or resource group or a first parameter identifier corresponding to the TCI state information to the terminal; or indicating the TCI state information corresponding to a scheduled resource to the terminal through a resource scheduling signaling.

Optionally, the TCI state information includes at least one TCI state value indication.

Optionally, the first indication signaling includes: at least one transmission reception point TRP information field; the TRP information field is configured to indicate at least one of: single-TRP transmission or multi-TRP transmission, or a TCI state value indication used during single-TRP transmission.

Optionally, the TRP information field is configured to indicate all of channels and/or signals, or indicate a part of channels and/or signals.

Optionally, the first indication signaling includes an indication field of at least one TCI state value.

Optionally, the resource includes at least one of following: a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of following: CORESET grouping, PDCCH grouping, PUCCH grouping, CSI-RS grouping, or SRS grouping.

An information transmission apparatus applied to a terminal is provided. The apparatus includes: a first receiving unit, configured to receive first information from a network device; a second determining unit, configured to determine at least one TCI state value corresponding to at least one resource or at least one resource group according to the first information; a first transmission unit, configured to perform information transmission according to the at least one TCI state value; wherein the first information includes first indication signaling; the first indication signaling is configured to indicate a TCI state value used by a resource or a resource group.

Optionally, determining the at least one TCI state value corresponding to the at least one resource or the at least one resource group according to the first information includes: determining the at least one TCI state value corresponding to the at least one resource or the at least one resource group according to the first information and first predefined information.

Optionally, the first predefined information includes at least one of following: a correspondence between one resource and another resource; or a correspondence between one resource group and another resource group; or a correspondence between one TCI state value indication and another TCI state value indication in TCI state information; or a correspondence between a resource or a resource group and TCI state information; or a correspondence between a first parameter identifier and TCI state information; or a correspondence between a resource or a resource group and a first parameter identifier; wherein the first parameter identifier is configured to identify a resource or a resource group.

Optionally, the first information further includes a first correspondence, or the first indication signaling carries a first correspondence; wherein the first correspondence includes at least one of: a correspondence between a resource or a resource group and TCI state information, a correspondence between a first parameter identifier and TCI state information, or a correspondence between a resource or a resource group and a first parameter identifier; the first parameter identifier is configured to identify a resource or a resource group.

Optionally, the correspondence between the resource or the resource group and the TCI state information includes: first sub-relationship between the resource or the resource group and the TCI state value indication; and/or the correspondence between the first parameter identifier and the TCI state information includes: second sub-relationship between the first parameter identifier and a TCI state value indication; wherein the TCI state value indication is configured to identify the TCI state information.

Optionally, the apparatus further includes: a fifth determining unit, configured for determining a beam direction corresponding to the at least one resource or the at least resource group based on second predefined information.

Optionally, the second predefined information includes at least one of: a beam direction of a synchronization signal block (SSB) determined when a terminal performs cell access, a beam direction of a physical uplink shared channel (PUSCH), or a predefined TCI state value..

Optionally, the apparatus further includes: a sixth determining unit, configured for determining a resource or resource group corresponding to at least one predefined control resource set CORESET group index; a third transmitting unit, configured for performing uplink transmission and/or downlink transmission of the determined resource or resource group according to the beam direction.

Optionally, the first parameter identifier includes at least one of: a control resource set CORESET group index, a CORESET index, a sounding reference signal SRS resource set index, a physical uplink shared channel PUSCH transmission occasion, or a maximum antenna port number index of a panel.

Optionally, receiving the first correspondence from the network device includes at least one of following: receiving TCI state information that is from a network device and is indicated or configured for at least one resource or at least one resource group; or receiving, from the network device, TCI state information indicated or configured for at least one resource or at least one resource group; or receiving, from the network device, a resource or resource group or a first parameter identifier corresponding to the TCI state information; or receiving, from the network device, the TCI state information corresponding to a scheduled resource through a resource scheduling signaling.

Optionally, the TCI state information includes at least one TCI state value indication.

Optionally, the first indication signaling includes: at least one transmission reception point TRP information field; the TRP information field is configured to indicate at least one of: single-TRP transmission or multi-TRP transmission, or a TCI state value indication used during single-TRP transmission.

Optionally, the TRP information field is configured to indicate all of channels and/or signals, or indicate a part of channels and/or signals.

Optionally, the first indication signaling includes an indication field of at least one TCI state value.

Optionally, the resource includes at least one of following: a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of following: CORESET grouping, PDCCH grouping, PUCCH grouping, CSI-RS grouping, or SRS grouping.

A processor-readable storage medium is provided, wherein the processor-readable storage medium stores a computer program, and the computer program is configured to cause a processor to perform the information transmission method of the network device side; or the processor-readable storage medium stores a computer program, and the computer program is configured to cause a processor to perform the information transmission method of the terminal side.

The above technical solution of the present disclosure has the following beneficial effects:
In the foregoing solution, the information transmission method determines at least one TCI state value corresponding to at least one resource or at least one resource group; transmits first information to a terminal according to the at least one TCI state value, where the first information includes first indication signaling, and the first indication signaling is configured to indicate a TCI state value used by a resource or a resource group; and can support implementing TRP transmission based on at least one TCI state, can specifically support multi-TRP transmission, and well solves the problem in the related art that an information transmission scheme for multi-TRP transmission cannot be supported.

### BRIEF DESCRIPTION OF THE DRAWINGS

FIG. 1 is a schematic architectural diagram of a wireless communication system according to an embodiment of the present disclosure;
FIG. 2 is a first schematic flowchart of an information transmission method according to an embodiment of the present disclosure;
FIG. 3 is a second schematic flowchart of an information transmission method according to an embodiment of the present disclosure;
FIG. 4 is a schematic structural diagram of a network device according to an embodiment of the present disclosure;
FIG. 5 is a schematic structural diagram of a terminal according to an embodiment of the present disclosure;
FIG. 6 is a first schematic structural diagram of an information transmission apparatus according to an embodiment of the present disclosure;
FIG. 7 is a second schematic structural diagram of an information transmission apparatus according to an embodiment of the present disclosure.

### DETAILED DESCRIPTION

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects.

In the embodiments of the present disclosure, the term "a plurality of" means two or more, and other quantifiers are similar.

The technical solutions provided in the embodiments of the present disclosure may be applied to various systems, in particular, a 5 th-generation mobile communication (5th-Generation, 5G) system. For example, the applicable system may be a global system of mobile communication (GSM) system, a code division multiple access (CDMA) system, a wideband code division multiple access (WCDMA) system, a General Group Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, A Universal Mobile Telecommunication System (UMTS), a Worldwide Interoperability for Microwave Access system, a 5G New Radio (NR) system, and the like. The plurality of systems each include a terminal device and a network device. The system may further include a core network part, for example, an Evolved Group System (EPS), a 5G system (5G System, 5 GS), and the like.

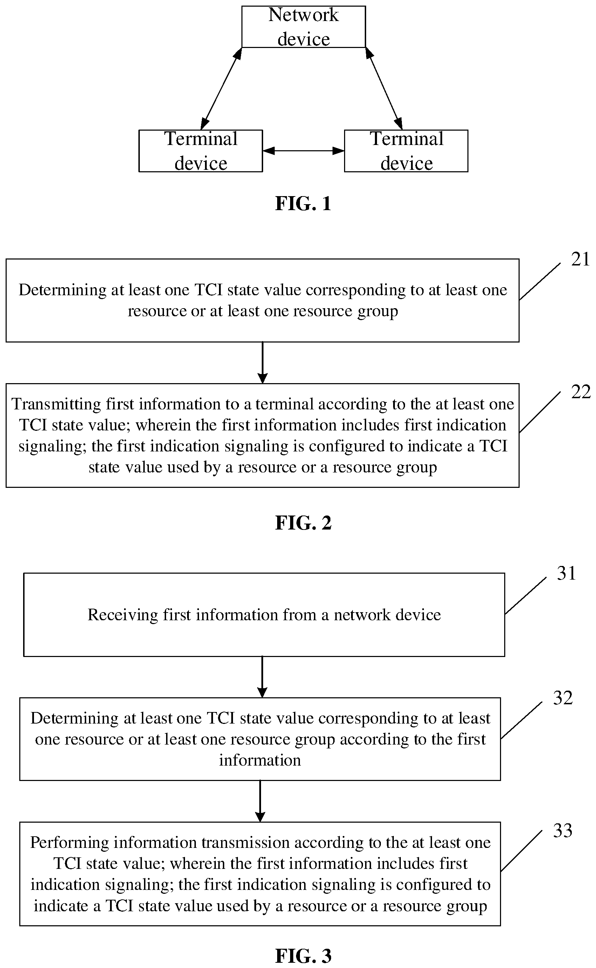

FIG. 1 is a block diagram of a wireless communication system to which an embodiment of the present disclosure may be applied. A wireless communication system includes a terminal device and a network device. The terminal device may also be referred to as a terminal, which is not limited herein.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) group as a router between the wireless terminal device and the rest of the access network, where the rest of the access network may include an Internet Protocol (IP) communication network. The network device may also coordinate attribute management of the air interface. For example, the network device in the embodiments of the present disclosure may be a Base Transceiver Station (BTS) in a Global System for Mobile Communications (GSM) or a Code Division Multiple Access (Code Division Multiple Access, CDMA), or may be a network device in a Wide-Band Code Division Multiple Access (WCDMA), The embodiment of the present disclosure is not limited in the embodiments of the present disclosure, but may also be an evolved network device in a Long Term Evolution (LTE) system, a 5G base station in a 5G Network Architecture (Next Generation System), a Home Evolved Node B, a Relay Node, a Femto, a Pico Base Station (Pico), etc. which is not limited in the embodiments of the present disclosure. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). The MIMO transmission may be two-dimensional MIMO (2D-MIMO), three-dimensional MIMO (3D-MIMO), full dimension MIMO (FD-MIMO) or super-large-scale MIMO (Massive-MIMO), or diversity transmission or precoding transmission or beamforming transmission, according to the form and quantity of the root antenna combination.

The following first describes the content involved in the solutions provided in the embodiments of the present disclosure.

In an NR (New Radio) system, a downlink channel includes a Physical Downlink Shared Channel (PDSCH) and a Physical Downlink Control Channel (PDCCH), and the uplink channel includes a Physical Uplink Shared Channel (PUSCH) and a Physical Uplink Control Channel (PUCCH). For high-frequency transmission (FR2 frequency band in NR), since transmission range is limited, usually uplink and downlink channels may be transmitted after beamforming to enhance coverage. The direction of the beamforming beam may be determined by beam scanning of the uplink and downlink reference signals, for example, beam scanning is performed by using Channel State Information (CSI)-Reference Signal (RS) or Sounding Reference Signal (SRS) in different directions, and the direction in which the reference signal with the best beam quality is located is selected for uplink or downlink transmission. The beam directions of different channels are determined, and a beam, that is, a beam indication, when signaling is used for indicating channel transmission needs to be used. Currently, for a PUCCH, a base station semi-statically configures a plurality of beam directions to a terminal through high-layer signaling SpatialRelationInfo, and instructs to activate one of the beams through a MAC (media access control)-CE (control element). For the PUSCH, the uplink beam selected by the base station is indirectly indicated by SpatialRelationInfo of the SRS resource indicated by the SRS resource index (SRI) field in the dynamic signaling DCI (downlink control information). For the PDCCH channel, the base station configures a plurality of TCI states for each control resource set (CORESET) through higher layer signaling, and instructs to activate one of the TCI states through the MAC-CE. For the PDSCH channel, the base station indicates one TCI state through the TCI field in the DCI signaling, to indicate the beam direction of the channel.

Different channels use different beam indication signaling, and each channel independently performs beam indication. Such different channels may use different beam transmissions. One important scenario in practical applications is that multiple channels use the same beam direction. For example, the same beam direction transmission is used between the PDCCH used for resource scheduling and the PDSCH for transmitting the user data; and the uplink control channel PUCCH and the uplink data channel PUSCH also use the same beam direction. When beam reciprocity exists, the uplink channel and the downlink channel will also use the same beam direction. In this case, the current independent beam indication manner increases system complexity and signaling indication overhead. In order to overcome the above problems, a method of indicating a plurality of channel beams by using one beam indication signaling is currently introduced, which activates a set of TCI states through a MAC-CE, and then uses DCI to indicate one of the activated TCI states. When the uplink and downlink channels are reciprocal, the beam indicated by the beam indication signaling may be used for both the uplink channel and the downlink channel; when the Maximum Permissible Exposure (MPE) problem or the terminal needs to switch the uplink beam due to human body shielding, the uplink channel will use a beam different from that for the downlink channel, so that the beam indication signaling needs to indicate the uplink channel beam and the downlink channel beam, respectively.

Based on the foregoing, embodiments of the present disclosure provide an information transmission method and apparatus, a network device, and a terminal, to resolve a problem in the related art that an information transmission scheme for multi-TRP transmission cannot be supported. The method, the apparatus, the network device, and the terminal are based on the same application concept, and because the method, the apparatus, the network device, and the terminal are similar in principle, the implementation of the method, the apparatus, the network device, and the terminal may be referred to each other, and details are not described herein again.

The information transmission method provided in the embodiments of the present disclosure is applied to a network device, as shown in FIG. 2, the method includes:
Step 21: determining at least one TCI state value corresponding to at least one resource or at least one resource group;
Step 22: transmitting first information to a terminal according to the at least one TCI state value, where the first information includes first indication signaling, and the first indication signaling is configured to indicate a TCI state value used by a resource or a resource group.

The first indication signaling may be Media Access Control Control Element MAC-CE signaling or Downlink Control Information DCI signaling; and the resource group may be configured for a terminal by using at least one of Radio Resource Control (RRC) signaling, MAC-CE signaling, and DCI, but is not limited thereto.

In addition, after step 22, the network device may further perform corresponding information transmission with the terminal side based on the at least one TCI state value, which is not limited herein.

The information transmission method provided in the embodiments of the present disclosure includes: determining at least one TCI state value corresponding to at least one resource or at least one resource group; transmitting first information to a terminal according to the at least one TCI state value, where the first information includes first indication signaling, and the first indication signaling is configured to indicate a TCI state value used by a resource or a resource group; and can support implementing TRP transmission based on at least one TCI state, can specifically support multi-TRP transmission, and well solves the problem in the related art that an information transmission scheme for multi-TRP transmission cannot be implemented.

The determining at least one TCI state value corresponding to the at least one resource or the at least one resource group includes: configuring at least one TCI state value corresponding to the at least one resource or resource group; or determining, based on the first predefined information, at least one TCI state value corresponding to the at least one resource or the at least one resource group. That is, the network device may autonomously determine the at least one TCI state value, or determine at least one TCI state value based on pre-definition, so that the at least one TCI state value may be determined in a diversified manner.

In this embodiment of the present disclosure, the first predefined information includes at least one of following: a correspondence between one resource and another resource; or a correspondence between one resource group and another resource group; or one TCI state value in TCI state information indicates a correspondence between one TCI state value and another TCI state value in the TCI state information; or a correspondence between the resource or the resource group and the TCI state information; or a correspondence between a first parameter identifier and TCI state information; or a correspondence between the resource or the resource group and the first parameter identifier, where the first parameter identifier is configured to identify a resource or a resource group. Based on this, correspondingly, for "determining at least one TCI state value corresponding to at least one resource or at least one resource group according to first predefined information" may include at least one of following:
1. in a case that the TCI state value corresponding to the first resource is determined, determining a TCI state value corresponding to the second resource according to the correspondence; 2, in a case that the TCI state value corresponding to the first resource group is determined, determining, according to the correspondence, a TCI state value corresponding to the second resource group; and 3, determining that the first resource group (for example, two resources) corresponds to the first TCI state information, and determining another TCI state value indication according to the determined TCI state value indication and the correspondence, so as to obtain a corresponding TCI value; and 4, determining the TCI state value of the resource or the resource group according to the determined TCI state value (specifically may be information indicated by using the first indication signaling) and a correspondence (for example, indicating to use a plurality of values); 5: determining a TCI state value of a resource or a resource group according to the determined TCI state value and a correspondence (for example, indicating to use a plurality of values, where the first parameter identifier is used to indicate a resource or a resource group); and 6, determine a TCI state value of a resource or a resource group according to the determined TCI state value and the correspondence (for example, indicating which value is used, the first parameter identifier is associated with TCI state information).

Further, the first information further includes a first correspondence, or the first indication signaling carries a first correspondence, where the first correspondence includes at least one of a correspondence between a resource or a resource group and TCI state information, a correspondence between a first parameter identifier and TCI state information, or a correspondence between a resource or a resource group and a first parameter identifier, and the first parameter identifier is configured to identify a resource or a resource group.

In this way, the first correspondence may be transmitted in multiple manners.

The correspondence between the resource or the resource group and the TCI state information includes: first sub-relationship between the resource or the resource group and a TCI state value indication; and/or the correspondence between a first parameter identifier and TCI state information includes: second sub-relationship between the first parameter identifier and a TCI state value indication, where the TCI state value indication is configured to identify the TCI state information.

In this way, the correspondence may be indirectly determined.

Further, the information transmission method further includes: determining a beam direction corresponding to the at least one resource or the at least one resource group according to the second predefined information.

In this way, the beam direction corresponding to the at least one resource or the at least one resource group may be obtained.

The second predefined information includes at least one of a beam direction of a synchronization signal block (SSB) determined when a terminal performs cell access, a beam direction of a physical uplink shared channel (PUSCH), or a predefined TCI state value.

In this way, it can be ensured that the beam direction corresponding to the at least one resource or the at least one resource group is accurately obtained.

Further, the information transmission method further includes: determining a resource or resource group corresponding to at least one predefined control resource set CORESET group index; and performing uplink transmission and/or downlink transmission of the determined resource or resource group according to the beam direction.

In this way, uplink transmission and/or downlink transmission of the determined resource or resource group may be implemented.

The first parameter identifier includes at least one of a control resource set CORESET group index, a CORESET index, a sounding reference signal SRS resource set index, a physical uplink shared channel PUSCH transmission occasion, or a maximum antenna port number index of a panel.

In this way, this solution can be implemented for multiple situations.

In the embodiments of the present disclosure, transmitting the first correspondence to the terminal includes at least one of following: transmitting TCI state information indicated or configured for at least one resource or at least one resource group to the terminal; or transmitting, to the terminal, a resource or resource group or a first parameter identifier corresponding to the TCI state information; or indicating, to the terminal by using the resource scheduling signaling, TCI state information corresponding to the scheduled resource.

In this way, content transmission for the first correspondence may be specifically implemented (it may also be understood as how to specifically notify the terminal of the first correspondence in a signaling manner). A correspondence between a value of an information field in the resource scheduling signaling and TCI state information is predefined or indicated by the network device to the terminal, which is not limited herein.

The TCI state information includes at least one TCI state value indication. In this way, information transmission indicated for at least one TCI state value may be supported.

In an embodiment of the present disclosure, the first indication signaling includes at least one transmission point TRP information field, where the TRP information field is configured to indicate at least one of a single-TRP transmission or multi-TRP transmission or a TCI state value indication used during single-TRP transmission.

In this way, dynamic switching between single-TRP transmission and multi-TRP transmission or specific transmission of a single TRP may be supported.

The TRP information field is configured to indicate all of channels and/or signals, or is configured to indicate a part of channels and/or signals. In this way, a TRP transmission indication for at least some channels or signals may be implemented.

In an embodiment of the present disclosure, the first indication signaling includes an indication field of at least one TCI state value. In this way, an indication of a TCI state specific value (i.e. a TCI state value) may be accurately performed.

The resource includes at least one of a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of a CORESET group, a PDCCH group, a PUCCH group, a CSI-RS group, or an SRS group.

In this way, this solution can be implemented for multiple scenarios.

An embodiment of the present disclosure further provides an information transmission method, applied to a terminal, as shown in FIG. 3, the method includes:
Step 31: receiving first information from a network device;
Step 32: determining at least one TCI state value corresponding to at least one resource or at least one resource group according to the first information;
Step 33: performing information transmission according to the at least one TCI state value, where the first information includes first indication signaling, and the first indication signaling is configured to indicate a TCI state value used by a resource or a resource group.

The first indication signaling may be Media Access Control Control Element (MAC-CE) signaling or Downlink Control Information (DCI) signaling, and the resource group may be configured by at least one of Radio Resource Control (RRC) signaling, MAC-CE signaling, and DCI, but is not limited thereto.

Step 32 may be determined purely based on information from the network device, or may be determined based on information from the network device and other information (for example, first predefined information), which is not limited herein.

The information transmission method provided in the embodiments of the present disclosure includes: receiving first information from a network device; determining at least one TCI state value corresponding to the at least one resource or the at least one resource group according to the first information; performing information transmission according to the at least one TCI state value, where the first information includes first indication signaling, and the first indication signaling is configured to indicate a TCI state value used by a resource or a resource group; and TRP transmission based on at least one TCI state can be supported, specifically, multi-TRP transmission can be supported, and a problem that an information transmission scheme for multi-TRP transmission cannot be supported in the related art is well solved.

Determining, based on the first information, at least one TCI state value corresponding to at least one resource or at least one resource group includes: determining at least one TCI state value corresponding to at least one resource or at least one resource group according to the first information and the first predefined information. In this way, the at least one TCI state value can be determined in combination with the first information and the predefined definition.

In this embodiment of the present disclosure, the first predefined information includes at least one of following: a correspondence between one resource and another resource; or a correspondence between one resource group and another resource group; or a correspondence between one TCI state value indication and another TCI state value in the TCI state information; or a correspondence between the resource or the resource group and the TCI state information; or a correspondence between a first parameter identifier and TCI state information; or a correspondence between the resource or the resource group and the first parameter identifier, where the first parameter identifier is configured to identify a resource or a resource group. Based on this, correspondingly, "determining at least one TCI state corresponding to at least one resource or at least one resource group according to the first information and the first predefined information" may include at least one of following:
1. determining a TCI state value corresponding to the first resource based on a TCI state value indicated by the first indication signaling (which may be understood as a specific TCI state value); and in a case that the TCI state value corresponding to the first resource is determined, determining a TCI state value corresponding to the second resource according to the correspondence;
2. determining, based on a TCI state value indicated by the first indication signaling (which may be understood as a specific TCI state value), a TCI state value corresponding to the first resource group; and in a case that the TCI state value corresponding to the first resource group is determined, determining, according to the correspondence, a TCI state value corresponding to the second resource group;
3. determining TCI state information corresponding to the first resource based on TCI state information indicated by the first indication signaling (which may be understood as a specific TCI state value); when it is determined that the first resource group (for example, two resources) corresponds to the first TCI state information, determining another TCI state value according to the determined TCI state value and the correspondence;
4. determining a specific TCI state value based on a TCI state value indicated by the first indication signaling; determining a TCI state value of a resource or a resource group according to the determined specific value of the TCI state (specifically indicated by using the first indication signaling) and a correspondence (for example, indicating which specific value is used);
5. determining a specific TCI state value based on a TCI state value indicated by the first indication signaling; determining a TCI state value of the resource or the resource group according to the determined specific value of the TCI state and the correspondence (for example, indicating which specific value is used, the first parameter identifier being used for indicating a resource or a resource group);
6. determining a specific TCI state value based on the TCI state value indicated by the first indication signaling; and determining a TCI state value of the resource or the resource group according to the determined specific TCI state value and the correspondence (for example, indicating which specific value is used and the first parameter identifier is associated with the TCI state information).

Further, the first information further includes a first correspondence; or the first indication signaling carries a first correspondence, where the first correspondence includes: at least one of following: (a first item) a correspondence between a resource or a resource group and TCI state information, (a second item) a correspondence between a first parameter identifier and TCI state information, or (a third item) resource or a resource group and a first parameter identifier, and the first parameter identifier is configured to identify a resource or a resource group.

In this way, the first correspondence may be transmitted in multiple manners. In addition, based on this, the determining, based on the first indication signaling and the first correspondence, the at least one TCI state value corresponding to the at least one resource or the at least one resource group may include at least one of following:
1. determining at least one TCI state value according to the first indication instruction, and determining a target resource and a corresponding target TCI state information value (TCI state information such as the TCI states indicated by using the first indication instruction) according to the correspondence in the first item;
2. determining at least one TCI state value according to the first indication instruction, and determining the target identifier and the corresponding target TCI state information according to the correspondence in the second item, so as to determine a TCI value corresponding to the target identifier; and determining a corresponding target resource according to the target identifier;
3. determining at least one TCI state value according to the first indication instruction, and determining the target resource and the corresponding target identifier according to the correspondence in the third item; determining the corresponding default TCI state information (the target TCI state information) according to the target resource or the target identifier, and then determining the TCI value corresponding to the target resource or the target identifier.

In the embodiments of the present disclosure, the correspondence between the resource or the resource group and the TCI state information includes: first sub-relationship between the resource or the resource group and the TCI state value indication; and/or the correspondence between a first parameter identifier and TCI state information includes: second sub-relationship between the first parameter identifier and a TCI state value indication, where the TCI state value indication is configured to identify the TCI state information.

In this way, the correspondence may be indirectly determined.

Further, the information transmission method further includes: determining a beam direction corresponding to the at least one resource or the at least one resource group according to the second predefined information.

In this way, the beam direction corresponding to the at least one resource or the at least one resource group may be obtained.

The second predefined information includes at least one of a beam direction of a synchronization signal block (SSB) determined when a terminal performs cell access, a beam direction of a physical uplink shared channel (PUSCH), or a predefined TCI state value.

In this way, it can be ensured that the beam direction corresponding to the at least one resource or the at least one resource group is accurately obtained.

Further, the information transmission method further includes: determining a resource or resource group corresponding to at least one predefined control resource set CORESET group index; and performing uplink transmission and/or downlink transmission of the determined resource or resource group according to the beam direction.

In this way, uplink transmission and/or downlink transmission of the determined resource or resource group may be implemented.

The first parameter identifier includes at least one of a control resource set CORESET group index, a CORESET index, a sounding reference signal SRS resource set index, a physical uplink shared channel PUSCH transmission occasion, or a maximum antenna port number index of a panel.

In this way, this solution can be implemented for multiple situations.

In the embodiments of the present disclosure, receiving the first correspondence from the network device includes at least one of following: receiving TCI state information transmitted from the network device and indicated or configured for at least one resource or at least one resource group; or receiving a resource or resource group or a first parameter identifier corresponding to the TCI state information from the network device; or receiving TCI state information corresponding to the scheduled resource indicated by the network device through the resource scheduling signaling.

In this way, content transmission for the first correspondence may be specifically implemented (it may also be understood that the network device specifically notifies the terminal of how the first correspondence is specifically notified to the terminal in a signaling manner). The correspondence between the value of the information field in the resource scheduling signaling and the TCI state information is predefined or indicated by the network device to the terminal.

The TCI state information includes at least one TCI state value indication. In this way, information transmission indicated for at least one TCI state value may be supported.

In an embodiment of the present disclosure, the first indication signaling includes at least one transmission point TRP information field, where the TRP information field is configured to indicate at least one of a single-TRP transmission or multi-TRP transmission or a TCI state value indication used during single-TRP transmission.

In this way, dynamic switching between single-TRP transmission and multi-TRP transmission or specific transmission of a single TRP may be supported. The terminal may perform TRP transmission switching according to the TRP information field, or determine, according to the TRP information field, a TCI state value used during single TRP transmission.

The TRP information field is configured to indicate all of channels and/or signals, or is configured to indicate a part of channels and/or signals. In this way, a TRP transmission indication for at least some channels or signals may be implemented. The terminal may determine, based on the TRP information field, TCI state values of all of channels and/or signals, or TCI state values of some channels and/or signals.

In an embodiment of the present disclosure, the first indication signaling includes an indication field of at least one TCI state value. In this way, the indication of the specific value of the TCI state can be accurately performed. The terminal may determine, based on the indication field of the TCI state value, at least one TCI state value corresponding to the at least one resource or the at least one resource group.

The resource includes at least one of a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of a CORESET group, a PDCCH group, a PUCCH group, a CSI-RS group, or an SRS group.

In this way, this solution can be implemented for multiple scenarios.

The following describes the information transmission method provided in the embodiments of the present disclosure, and an example of the network device is a base station.

In view of the foregoing technical problem, an embodiment of the present disclosure provides an information transmission method, which may be specifically implemented as a beam indication method, and mainly relates to the following two parts:

### Part 1: base station side:

1): The base station transmits the first indication signaling and/or the first correspondence to the terminal. The base station transmits or receives according to the first indication signaling and the first correspondence. At least one TCI state value corresponding to the at least one resource or the at least one resource group is determined; and the first information is transmitted to the terminal according to the at least one TCI state value. One TCI state value may correspond to one TRP.
2): The first indication signaling in the above "1)" is configured to indicate a TCI state (corresponding to the TCI state value) used by a resource or a resource group, and may be MAC-CE signaling or DCI signaling.
3): The first indication signaling in the above "1)" may further include one or more TRP information fields, which are used to indicate single TRP transmission or multi-TRP transmission, and/or TCI state information used during single TRP transmission (corresponding to a TCI state value indication used during single TRP transmission).
4): The TRP information field described in the above "3)" may be used to indicate all of channels and/or signals, or may be used to indicate a part of channels and/or signals.
5): The first correspondence in the above "1)" may be one or more of a correspondence between a resource or a resource group and TCI state information, a correspondence between a first parameter identifier (used to identify a resource or a resource group) and TCI state information, a correspondence between a resource or a resource group and a first parameter identifier (in this case, a correspondence exists between a parameter identifier and a TCI state by default).
6): The first parameter identifier in the above "5)" may include a CORESET group index (CORESETPoolIndex), a CORESET index, an SRS resource set index, a PUSCH transmission occasion, and a maximum antenna port number index (capabilityValueSetIndexReporting) of a panel.
7): transmitting the first correspondence in the above "1)", includes one or more of the following:
   indicating or configuring TCI state information for each resource or resource group (corresponding to transmitting TCI state information indicated or configured for at least one resource or at least one resource group to the terminal), or
   indicating a resource or resource group or a first parameter identifier corresponding to the TCI state information (corresponding to transmitting a resource or resource group or a first parameter identifier corresponding to the TCI state information to the terminal), or
   indicating the TCI state information corresponding to the scheduled resource by the resource scheduling signaling (corresponding to indicating the TCI state information corresponding to the scheduled resource to the terminal through the resource scheduling signaling).
8) indicating the TCI state information corresponding to the scheduled resource by the resource scheduling signaling further includes:
   the system predefines a correspondence between an information field value in the resource scheduling signaling and TCI state information (a correspondence between an information field value and TCI state information in the resource scheduling signaling is predefined); or
   the base station indicates a correspondence between an information field value in the resource scheduling signaling and TCI state information (a correspondence between an information field value in the resource scheduling signaling and TCI state information is indicated by the network device to the terminal).
9) The resource in "2)" may include one or more of a CORESET, a PDCCH, a PDSCH, a PUCCH, a PUSCH, a CSI-RS, and an SRS.
10) The resource group in the "2)" may include one or more of a CORESET group, a PDCCH group, a PUCCH group, a CSI-RS group, and an SRS group.
11): The resource group in "2)" may be configured (i.e. transmitted to the terminal) through one or more of RRC signaling, MAC-CE signaling, and DCI.
12): The first correspondence in "1)" may be indicated by the first signaling (the first indication signaling carrying the first correspondence).
13) The TCI state information in the above "5)" may be a TCI state or a group of TCI states (the TCI state information including at least one TCI state value indication).
14): The first correspondence in the above "1)" may be predefined by the system, and in this case, the base station does not need to indicate the first correspondence (but may also transmit and receive information according to this), which includes: the corresponding TCI state information is predefined for each resource or resource group, that is, determining, based on the first predefined information, at least one TCI state value corresponding to the at least one resource or the at least one resource group.
15): The first indication signaling in the above "2)" may include one or more TCI state indication fields (corresponding to the indication fields of the at least one TCI state value).

### Part 2: terminal side:

1): Receiving a first indication signaling and/or a first correspondence from a base station. The terminal transmits or receives according to the first indication signaling and the first correspondence. That is, the first information is received from the network device; at least one TCI state value corresponding to the at least one resource or the at least one resource group is determined according to the first information; and information transmission is performed according to the at least one TCI state value. One TCI state value may correspond to one TRP.
2): The first indication signaling in the above "1)" is configured to indicate a TCI state (corresponding to the TCI state value) used by the resource or resource group, and may be MAC-CE signaling or DCI signaling.
3): The first indication signaling in the above "1)" may further include one or more TRP information fields, which indicate single-TRP transmission or multi-TRP transmission, and/or TCI state information (corresponding to a TCI state value indication used during single-TRP transmission) used during single-TRP transmission.
4): The TRP information field in "3)" may be used to indicate all of channels and/or signals, or may be used to indicate a part of channels and/or signals.
5): The first correspondence in "1)" may be one or more of a correspondence between a resource or a resource group and TCI state information, a correspondence between a first parameter identifier (used to identify a resource or a resource group) and TCI state information, a correspondence between a resource or a resource group and a first parameter identifier (in this case, a correspondence exists between a parameter identifier and a TCI state by default).
6): The first parameter identifier in "5)" may include a CORESET group index (CORESETPoolIndex), a CORESET index, an SRS resource set index, a PUSCH transmission occasion, and a maximum antenna port number index (capabilityValueSetIndexReporting) of a panel.
7): receiving a first correspondence in the above "1)" includes one or more of the following:
   receiving TCI state information indicated or configured by the base station for each resource or resource group, which corresponds to receiving TCI state information transmitted from the network device and indicated or configured for at least one resource or at least one resource group; or
   receiving a resource or resource group or a first parameter identifier corresponding to the TCI state information indicated by the base station, which corresponds to receiving the resource or resource group or the first parameter identifier, corresponding to the TCI state information, from the network device; or
   receiving the TCI state information corresponding to the scheduled resource indicated by the base station through the resource scheduling signaling, which corresponds to receiving the TCI state information corresponding to the scheduled resource indicated by the network device through the resource scheduling signaling.
8): the receiving the TCI state information corresponding to the scheduled resource indicated by the base station through the resource scheduling signaling in "7)" further includes:
   predefining a correspondence between an information field value in the resource scheduling signaling and TCI state information (a correspondence between an information field value and TCI state information in the resource scheduling signaling, which is predefined) by the system; or
   receiving the correspondence between an information field value in the resource scheduling signaling and TCI state information (correspondence between an information field value and TCI state information in the resource scheduling signaling, which is indicated by the network device to the terminal) indicated by the base station.
9): The resource in "2)" may include one or more of a CORESET, a PDCCH, a PDSCH, a PUCCH, a PUSCH, a CSI-RS, and an SRS.
10) The resource group in the "2)" may include one or more of a CORESET group, a PDCCH group, a PUCCH group, a CSI-RS group, and an SRS group.
11): The resource group in "2)" may be configured by one or more of RRC signaling, MAC-CE signaling, and DCI.
12): The first correspondence in "1)" may be indicated by the first signaling (the first indication signaling carrying the first correspondence).
13): The TCI state information in the "5)" may be a TCI state or a group of TCI states (the TCI state information including at least one TCI state value indication).
14): The first correspondence in the "1)" may be predefined by the system, and in this case, not receiving the first correspondence includes:
   predefining the corresponding TCI state information for each resource or resource group. That is, at least one TCI state value corresponding to the at least one resource or the at least one resource group is determined according the first information and the first predefined information.
15): The first indication signaling in the above "2)" may include one or more TCI state indication fields (corresponding to the indication field of the at least one TCI state value).

The solutions provided in the embodiments of the present disclosure are specifically exemplified below.

### Example 1

The base station indicates two TCI states for the terminal through DCI signaling or first MAC-CE signaling (that is, transmitting the first indication signaling to the terminal, where the TCI states correspond to the TCI state values). The base station configures five CORESETs for the terminal through RRC signaling, which are respectively denoted as CORESET # 0, CORESET # 1, ......, CORESET # 4, the base station configures the mapping relationship between the TCI state indicated by the DCI and the CORESET (corresponding to the first correspondence) for the terminal, and is used for transmission of the CORESET. The mapping relationship may be configured by using a MAC-CE or an RRC signaling. (1) In one manner, in the configuration of each CORESET, RRC signaling is configured by configuring TCI_usage (which may be understood as selection; and corresponding to the above TCI state value indication) to indicate that the RRC signaling uses the first or the second one of the two TCI states, or uses two TCI states. For example, the following configuration is used:

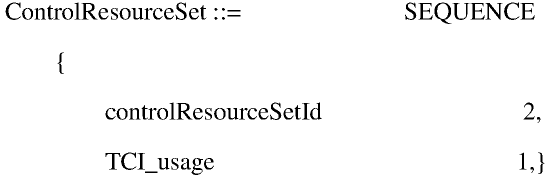

It indicates that CORESET # 2 uses the indicated first TCI state. Or the following configuration is used:

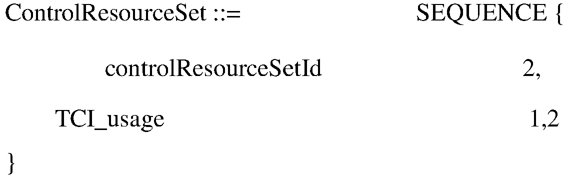

It indicates that CORESET # 2 uses both the indicated first TCI state and the indicated second TCI state. It can be applied to a high-speed rail scenario.

(2) Another implementation is to configure a CORESET group (that is, a CORESET group or a CORESET set) by using an RRC, and the base station configures a mapping relationship (corresponding to the first correspondence) between a TCI state (corresponding to the TCI state indication) and a CORESET group for the terminal. Group 1 includes {CORESET # 0, CORESET # 1, CORESET # 2}, Group 2 includes {CORESET # 3, CORESET # 4 }. A first TCI state and a second TCI state may be configured in Group 1, and a second TCI state may be configured in Group 2. In addition, the CORESET in the group 1 may use two TCI states through a system agreement, and the first TCI state is used in the group 2. At this point, the TCI state used in the group does not need to be configured. The CORESET ID in the CORESET group may be updated by the MAC-CE. That is, one method is indication information of the used TCI state (value indication) is carried in configuration of a CORESET group by the base station; another method is a system agreement, and the used TCI state (value indication) may be known according to the CORESET ID.

(3) Another implementation is: the RRC signaling configures a CORESET set corresponding to the indicated first TCI state (value indication), and a CORESET set corresponding to the indicated second TCI state. For example, the RRC configures the first TCI state association {CORESET # 0, CORESET # 1}, and the second TCI state association {CORESET # 2, CORESET # 3, CORESET # 4}; or the RRC configures the first TCI state association {CORESET # 0, CORESET # 1, CORESET # 3}, and the second TCI state association {CORESET # 2, CORESET # 3, CORESET # 4}. Here, the CORESET # 3 uses two TCI states, and can be used in a high-speed rail scenario.

(4) Another implementation is to use MAC-CE signaling to indicate the association relationship (that is, an association relationship between a TCI state and a CORESET set). For example, in MAC-CE signaling that activates the TCI state, a CORESET set associated with each TCI state bit is added (i.e. a CORESET group, and the foregoing TCI_usage parameter configuration is not required in this case), as follows:

| Table 1. TCI states activated in MAC-CE signaling (correspondenc e between TCI states and sets) Codepoints | Activated TCI state-1 | Activated TCI state-2 |
|---|---|---|
| | CORESET#0,CORESET #1 | CORESET#2,CORESET#3,CORESET #4 |
| 000 | TCI-State3 | TCI-State5 |
| 001 | TCI-State9 | TCI-State10 |
| 010 | TCI-State18 | TCI-State19 |
| 011 | TCI-State25 | TCI-State29 |
| 100 | TCI-State36 | TCI-State39 |
| 101 | TCI-State7 | TCI-State2 |
| 110 | TCI-State100 | TCI-State102 |
| 111 | TCI-State88 | TCI-State98 |

The activated TCI state-1 is associated with {CORESET # 0, CORESET # 1}, and activated TCI state-2 is associated with {CORESET # 2, CORESET # 3, CORESET # 4 }. When the DCI signaling indicates one code point "001", CORESET # 0 and CORESET # 1 are transmitted using the first TCI state TCI-State 9; CORESET # 2, CORESET # 3, and CORESET # 4 are transmitted using the second TCI state TCI-State 10. Alternatively, the configuration is as follows:

**TABLE 2. TCI states activated in MAC-CE signaling**

| codepoin ts | Activated TCI state-1 | Activated TCI state-2 |
|---|---|---|
| | CORESET#0,CORESET#1,CORE SET#4 | CORESET#2,CORESET#3,CORE SET#4 |
| 000 | TCI-State3 | TCI-State5 |
| 001 | TCI-State9 | TCI-State10 |
| 010 | TCI-State18 | TCI-State19 |
| 011 | TCI-State25 | TCI-State29 |
| 100 | TCI-State36 | TCI-State39 |
| 101 | TCI-State7 | TCI-State2 |
| 110 | TCI-State100 | TCI-State102 |
| 111 | TCI-State88 | TCI-State98 |

The CORESET # 4 is transmitted by using two TCI states, and may be applied to a high-speed rail scenario.

(5) Another implementation is that the MAC-CE indicates the TCI state (value) of each CORESET or each CORESET group. For example, the RRC configures three CORESETs for the terminal. As shown in Table 3, a corresponding TCI state is configured for each CORESET in MAC-CE activation signaling. The TCI states of the CORESET # 1 and the CORESET # 2 are the same, indicating that the CORESET # 1 and the CORESET # 2 use the same TRP transmission.

**TABLE 3. TCI states activated in MAC-CE signaling**

| codepoints | CORESET#0 | CORESET#1 | CORESET#2 |
|---|---|---|---|
| 000 | TCI-State3 | TCI-State5 | TCI-State5 |
| 001 | TCI-State9 | TCI-State10 | TCI-State10 |
| 010 | TCI-State18 | TCI-State19 | TCI-State19 |
| 011 | TCI-State25 | TCI-State29 | TCI-State29 |
| 100 | TCI-State36 | TCI-State39 | TCI-State39 |
| 101 | TCI-State7 | TCI-State2 | TCI-State2 |
| 110 | TCI-State100 | TCI-State102 | TCI-State102 |
| 111 | TCI-State88 | TCI-State98 | TCI-State98 |

(6) Another implementation is to use DCI signaling to indicate. The DCI signaling indicating the TCI state (value) from the base station may include one TCI usage association domain to indicate TCI states used by different CORESETs or different CORESET groups. For example, the CORESET is grouped, where group 1 includes {CORESET # 0, CORESET # 1, CORESET # 2}, group 2 includes {CORESET # 3, CORESET # 4}, and group configuration may be performed using RRC signaling. In the DCI, the DCI includes a TCI field (corresponding to the indication field of the TCI state value), which is used to indicate the TCI state. Meanwhile, the DCI may further include a TCI usage association domain. 1) An implementation is that the TCI usage association domain is indicated by using codepoint states, for example, as shown in Table 4 below:

**TABLE 4**

| TCI field | TCI usage association field |
|---|---|
| 011 | 00 |

The TCI usage association domain may include 2 bits, "00" indicates that group 1 uses the first TCI state (value) indicated by the TCI domain and group 2 uses the second TCI state indicated by the TCI domain, "01" indicates that group 1 uses the second TCI state indicated by the TCI domain and group 2 uses the first TCI state indicated by the TCI domain, "10" indicates that both group 1 and group 2 use the first TCI state indicated by the TCI domain, and "11" indicates that both group 1 and group 2 use the second TCI state indicated by the TCI domain. The two TCI states may also be used by the group 1 through a code point, or the group 2 uses two TCI states, etc. It is assumed that "011" corresponds to TCI-State 25 and TCI-State 29, which may be determined according to the TCI usage association domain. Group 1 uses TCI-State 25, and Group 2 uses TCI-State 29.

2) In another implementation, the TCI usage association field in the DCI indicates the TCI state (value) used by each CORESET in a bitmap manner. The following Table 5 is shown in Table 5:

**TABLE 5**

| TCI field | TCI usage association field |
|---|---|
| 011 | 00101 |

The TCI usage association domain contains 5 bits. Each bit corresponds to one CORESET, 0 represents using the first TCI state, and 1 represents using the second TCI state; if "011" corresponds to TCI-state 25 and TCI-state 29, it is determined that CORESET # 0, CORESET # 1, CORESET # 3 use TCI-state 25, CORESET # 2 and CORESET # 4 use TCI-state 29

### Example 2:

The base station configures a PUCCH resource group for the terminal, where each PUCCH resource group includes one or more PUCCH resources, or the base station configures the index of a resource group for each PUCCH resource. The PUCCH resources in the resource group may be updated through MAC-CE signaling. The base station indicates two TCI states for the terminal through DCI signaling or first MAC-CE signaling (transmitting the first indication signaling to the terminal, where the TCI state corresponds to the TCI state value). The terminal needs to determine the correspondence between the TCI state and the PUCCH resource group or the PUCCH resource (corresponding to the first correspondence) indicated by the base station, so that each PUCCH resource is transmitted by using the corresponding TCI state.

The following provides a specific implementation manner:
(1) One implementation is that the system predefines a correspondence between a PUCCH resource group and a TCI state. For example, the base station configures two PUCCH resource groups for the terminal, and specifies that two TCI states (values) indicated by the base station correspond to the resource group 1, and the resource group 2 corresponds to the first TCI state indicated by the base station. If the base station indicates the TCI-State 9 and the TCI-State 10, each PUCCH resource in the resource group 1 will use the two states for transmission. The specific transmission may be that a plurality of transmission occasions of one PUCCH resource in the resource group 1 are sequentially and cyclically mapped to a transmission beam (denoted as # 1) corresponding to the TCI_State 9 and a transmission beam (denoted as # 2) corresponding to the TCI_State 10. Taking four transmissions as an example, the mapping pattern of the transmitting beam is # 1 # 2 # 1 # 2, and corresponds to two TRP transmissions. For each PUCCH resource in the resource group 2, only the transmission beam corresponding to the TCI_state 9 is used for transmission, and corresponds to single-TRP transmission. Alternatively, the base station configures three PUCCH resource groups for the terminal, and specifies two TCI states indicated by the base station corresponding to the resource group 1, the resource group 2 corresponds to the first TCI state indicated by the base station, and the resource group 3 corresponds to the second TCI state indicated by the base station.
(2) Another implementation is to use MAC-CE signaling to indicate a correspondence between a PUCCH resource group (that is, a PUCCH group) and a TCI state. For example, in the MAC-CE signaling that activates the TCI state, the PUCCH resource group associated with each TCI state bit is added. For example, similar to Example 1 (see Table 1 to Table 3, the CORESET group corresponds to the PUCCH resource group), and details are not described herein again.
(3) Another implementation is to use DCI signaling to indicate. The DCI signaling indicating the TCI state by the base station may include one TCI usage association domain to indicate TCI states (values) used by different PUCCH groups. Specifically, similar to Example 1 (similar to, for example, grouping CORESET, where group 1 includes {CORESET # 0, CORESET # 1, CORESET # 2}, group 2 includes {CORESET # 3, CORESET # 4 }. The group configuration may be performed using RRC signaling. In the DCI, the DCI includes a TCI field (corresponding to the indication field of the TCI state value), which is used to indicate the TCI state. Meanwhile, the DCI may further include a TCI usage association domain. One implementation is that a TCI usage association domain is is indicated by using a codepoint state; and a CORESET group corresponds to a PUCCH resource group), and details are not described herein again.
(4) Another implementation is to use DCI signaling to indicate. The DCI signaling indicating the TCI state by the base station includes one TCI usage association domain to indicate the TCI state used for the PUCCH resource for uplink ACK or NACK feedback. Specifically, similar to Example 1 (similar to DCI signaling indicating the TCI state by the base station may include one TCI usage association domain, indicating TCI states used by different CORESETs or different CORESET groups; PUCCH resources correspond to CORESETs), and details are not described herein again.
(5) The present example may also configure, in each PUCCH resource or each PUCCH resource set, a TCI state (for example, there is no state group corresponding to TCI 1 or no state group corresponding to TCI 2, and directly configure the TCI state in each resource and resource set; and the TCI state corresponds to the TCI state value indication). For example, as follows:

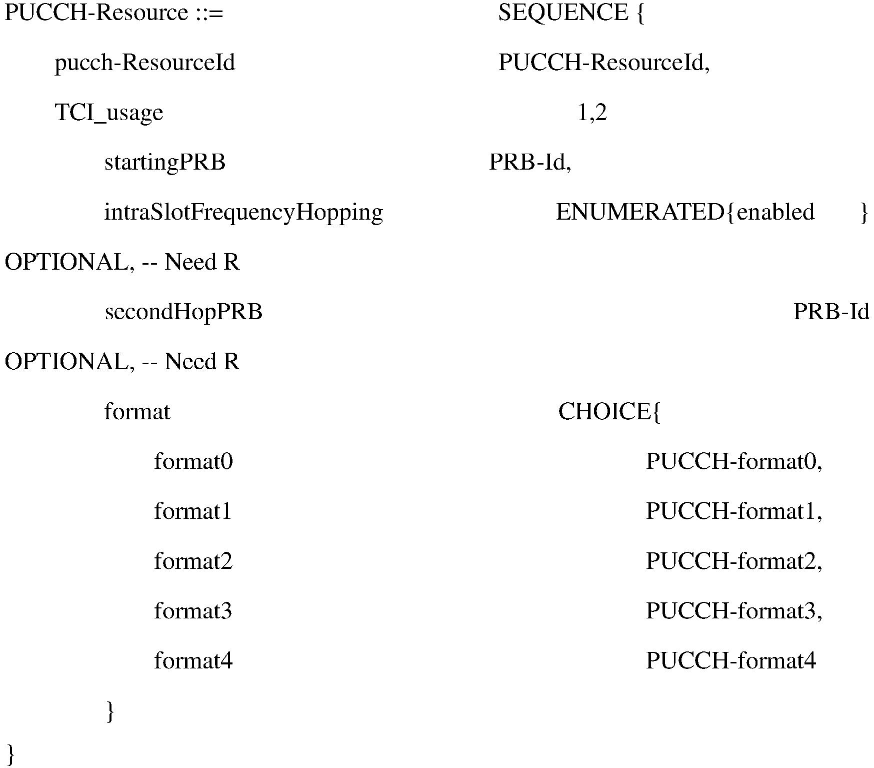

It indicates that the PUCCH resource uses the first TCI state and the second TCI state.

### Example 3

The base station indicates, by using DCI signaling or first MAC-CE signaling, two TCI states for the terminal (corresponding to transmitting the first indication signaling to the terminal, where the TCI state corresponds to the TCI state value), and is used for PUSCH transmission; and a mapping relationship between the TCI state and the PUSCH transmission occasion needs to be indicated (corresponding to the first correspondence).

The following provides a specific implementation manner:
(1) One implementation is to configure a TCI state used by each SRS resource set or each SRS resource (there is a correspondence between a PUSCH transmission occasion and an SRS resource set). For example: 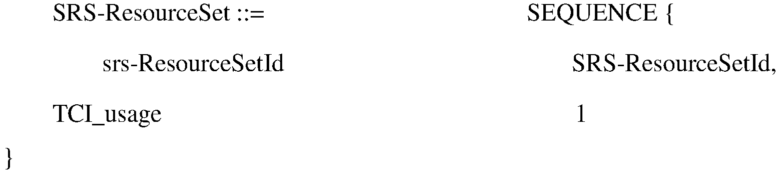 It indicates that the SRS resource set uses the first TCI state. The repeated transmissions using different TCI states are implemented according to the correspondence between the PUSCH transmission occasion and the SRS resource set predefined by the system.
(2) Another implementation is to configure the TCI state (value indication) in the PUSCH configuration. The following shows that the PUSCH uses the first TCI state and the second TCI state to perform mTRP (multi-TRP) transmission (the relationship between the transmission occasion and the TCI state may be fixed by the system), as follows. This manner may be used for repeated transmission of grant-free PUSCH. The system predefines that the first repeated transmission uses the first TCI state, and the second repeated transmission uses the second TCI state. 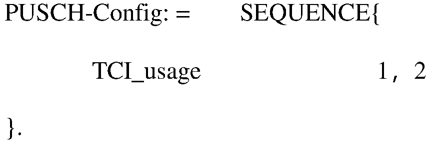
(3) Another implementation is that the system predefines the correspondence between a code point in a 2-bit SRS resource set(s) domain in DCI and a TCI state (a value indication). For example, the system predefines the mapping relationship below (see Table 6 below). "00" indicates single TRP transmission, and each transmission occasion uses the first TCI state indicated by the base station to perform PUSCH transmission. The "10" represents multi-TRP transmission, the first transmission occasion uses the first TCI state to transmit the PUSCH, and the second transmission occasion uses the second TCI state to transmit the PUSCH, and so on. The column of the SRS resource set domain may also not be included.

**TABLE 6**

| Codepoint | SRS resource set field | SRI/TPMI (which can be considered as SRI and TPMI) indication | TCI state usage |
|---|---|---|---|
| 00 | sTRP mode, using a first SRS resource set; | Using a first SRI/TPMI field (a second SRI/TPMI is not used) ; | Using the first indicated TCI state; |
| 01 | sTRP mode, using a second SRS resource set; | Using a first SRI/TPMI field (a second SRI/TPMI is not used) ; | Using the second indicated TCI state; |
| 10 | mTRP mode and a first occasion corresponds to TRP1, a second occasion corresponds to TRP2; a first SRI/TPMI field corresponds to a first SRS resource set; a second SRI/TPMI field corresponds to a second SRS resource set; | Both the first SRI/TPMI field and the second SRI/TPMI are used; | The first occasion uses the first indicated TCI state, the second occasion uses the second indicated TCI state; |
| 11 | mTRP mode and a first occasion corresponds to TRP2, a second occasion corresponds to TRP1; a first SRI/TPMI field corresponds to a first SRS resource set; a second SRI/TPMI field corresponds to a second SRS resource set; | Both the first SRI/TPMI field and the second SRI/TPMI are used; | The first occasion uses the second indicated TCI state, the second occasion uses the first indicated TCI state; |

The TPMI is a Transmission Pre-Coding Matrix Indicator (TPMI), which indicates a transmission precoding matrix indicator.

(4) Another implementation is to use MAC-CE signaling to indicate the association relationship (that is, a correspondence between a TCI state and an SRS resource set). For example, in MAC-CE signaling that activates the TCI state, an SRS resource set associated with each TCI state bit is added. For example, similar to Example 1 (see Table 1 to Table 3, the CORESET group corresponds to the SRS resource set), and details are not described herein again.

### Example 4

(1) The base station indicates two TCI states for the terminal through DCI signaling (corresponding to transmitting the first indication signaling to the terminal, where the TCI state corresponds to the TCI state value). The DCI signaling includes a sTRP (single TRP) and/or an mTRP (multi-TRP) indication field. The indication field includes 2 bits, and the system predefines a correspondence between a code point in the indication field and a TCI state (corresponding to the first correspondence). A correspondence may be as shown in Table 7 below:

**TABLE 7**

| Codepoint | Correspondence |
|---|---|
| 00 | sTRP, using a first TCI state |
| 01 | sTRP, using a second TCI state |
| 10 | mTRP, using two TCI states |
| 11 | mTRP, using two TCI states |

According to the foregoing correspondence, the base station transmits the PDSCH by using one TRP or two TRPs.
(2) Another implementation is that the base station indicates one or two TCI states (values) for the terminal through DCI signaling. Meanwhile, the DCI signaling includes a sTRP and/or mTRP indication field. A correspondence between a code point in the indication field and a TCI state is predefined in the system, as shown in Table 8 below. When the base station indicates two TCI states, the meaning of the states is the same as the meaning of the previous table, i.e., sTRP or mTRP is used for transmission. When the base station indicates one TCI state, when the base station indicates '10' or '11', it indicates that the mTRP transmission is still used, and one TCI state in the current two TCI states is updated (i.e. replaced).

**TABLE 8**

| Codepoint | Correspondence |
|---|---|
| 00 | when 2 TCI states are indicated: sTRP, using a first TCI state when 1 TCI state is indicated: sTRP |
| 01 | when 2 TCI states are indicated: sTRP, using a second TCI state when 1 TCI state is indicated: sTRP |
| 10 | when 2 TCI states are indicated: mTRP, using two TCI states when 1 TCI state is indicated: mTRP, updating the first TCI state |
| 11 | when 2 TCI states are indicated: mTRP, using two TCI states when 1 TCI state is indicated: mTRP, updating the first TCI state |

### Example 5

When the base station configures the CORESETPoolIndex for the terminal, it indicates that M-DCI (multi-DCI) is used for scheduling (corresponding to transmitting the first indication signaling to the terminal). The base station may indicate a correspondence between a TCI state (a value indication) and a CORESETPoolIndex (corresponding to the first correspondence). (1) In one manner, a CORESETPoolIndex corresponding to each TCI state may be configured in MAC-CE signaling which activates TCI states; or a corresponding TCI state may also be configured under each CORESET by RRC, for example, corresponding to a first TCI state or a corresponding second TCI state, Meanwhile, the TCI states of the CORESET corresponding to the same CORESETPoolIndex are required to be the same; or two TCI indication fields (corresponding to the indication field of the above TCI state value) may also be configured in the DCI indicated by the TCI, as shown in Table 9 below, the first TCI indication field indicates the TCI state corresponding to the CORESETPoolIndex 0, and the second TCI indication field indicates the TCI state corresponding to the CORESETPoolIndex 1. When only one TCI state corresponding to one CORESETPoolIndex is indicated, the other TCI indication field is set to be invalid.

**TABLE 9**

| TCI field/CORESETPoolIndex0 | TCI field/CORESETPoolIndex1 |
|---|---|
| 011 | 001 |

(2) Another manner is to indicate the TCI state (value) and CORESETPoolIndex information in the DCI indicated by the TCI. For example, Table 10 below:

**TABLE 10**

| TCI field | CORESETPoolIndex |
|---|---|
| 011 | 0 |

A TCI state indicated by the TCI field is applied to a CORESET corresponding to CORESETPoolIndex 0 and a PDSCH scheduled by the CORESET.

### Example 6

To implement simultaneous transmission of the uplink multiple panels, the terminal needs to enable the TCI state indicated by the base station (corresponding to the first indication signaling, and the TCI state corresponds to the TCI state value) to correspond to different panels of the terminal (the terminal determining the TCI state value of the panel according to the first correspondence), so that each panel corresponds to one transmission beam (one beam corresponds to one TCI state value). (1) An implementation is to configure a correspondence between a TCI state and an SRS resource set (corresponding to the first correspondence; there is a correspondence between the SRS resource set and the panel, and the terminal may determine the relationship, which may be specifically default). A configuration manner of a correspondence between the TCI state and the SRS resource set is similar to that of example 3, and details are not described herein again. Specifically, assuming that the terminal transmits the SRS resource set 0 by using the panel 0, and the panel 1 is used to transmit the SRS resource set 1. When the base station indicates the two TCI states and schedules the PUSCH transmission, the panel of the terminal which transmits the SRS resource set 0 uses the TCI state corresponding to the SRS resource set 0 to perform uplink transmission , according to the mapping relationship (i.e. the correspondence), The panel that transmits the SRS resource set 1 performs uplink transmission by using the TCI state corresponding to the SRS resource set 1.

(2) Another implementation is to configure a correspondence (corresponding to the first correspondence) between a TCI state (a value indication) and a maximum antenna port number index of a parameter panel. The maximum antenna port number index of the panel corresponds to different panels. 1) A configuration manner may be indicating the correspondence in DCI signaling indicated by a beam. For example, the correspondence field is added to the DCI, and the system predefines a relationship domain value (corresponding to the codepoint) and the correspondence, as shown in Table 11 below:

**TABLE 11**

| Codepoint | Correspondence field |
|---|---|
| 0 | The first TCI state corresponds to capabilityValueSetIndexReporting=0 ; the second TCI state corresponds to capabilityValueSetIndexReporting=1; |
| 1 | The first TCI state corresponds to capabilityValueSetIndexReporting=1 ; the second TCI state corresponds to capabilityValueSetIndexReporting=0; |

2 Another implementation is to use MAC-CE signaling to indicate the association relationship. For example, in the MAC-CE signaling that activates the TCI state (value), the maximum antenna port number index of the panel associated with each TCI state bit is increased. Specifically, similar to Example 1 (similar to the MAC-CE signaling in the activated TCI state, the CORESET associated with each TCI state bit is added; the maximum antenna port number index corresponds to the CORESET), and details are not described herein again.

(3) Another implementation may be to configure a correspondence between a TCI state (a value indication) and a maximum antenna port number index of a panel through RRC signaling.

### Example 7

In the foregoing examples 1-6, the base station indicates two TCI states for the terminal (corresponding to transmitting the first indication signaling to the terminal, and the TCI state corresponds to the TCI state value), which corresponds to a scenario in which each TRP and the terminal use one beam; or the base station indicates three TCI states (denoted as TCI_state 0, TCI_state 1, TCI_state 2) for the terminal. A beam is used between the TRP 0 and the terminal, that is, the uplink and downlink beams are the same; and two beams are used between the TRP 1 and the terminal, and the uplink and the downlink use different beams. In this case, a correspondence (included in the first correspondence) between the first TCI state and the resource or resource group (for example, CORESETPoolIndex) described in Examples 1-6 may correspond to a correspondence between the first TCI state information and a resource or a resource group. The first TCI state information includes a first TCI state indication (for example, indicating TCI_state 0). The correspondence between the second TCI state and the resource or resource group (including the first correspondence) may correspond to a correspondence between the second TCI state information and the resource or the resource group. The second TCI state information includes a second TCI state indication and a third TCI state indication (for example, indicating TCI_state 1 and TCI_state 2). Similarly, the base station may further indicate four TCI states for the terminal. Different beams are used for uplink and downlink between the TRP 0 and the terminal, and different beams are used for uplink and downlink between the TRP 1 and the terminal. In this case, the first TCI state information includes a first TCI state indication and a second TCI state indication, and the second TCI state information includes a third TCI state indication and a fourth TCI state indication. Therefore, the TCI state values are different, and each TCI state information may include one or more TCI state value indications for indicating at least one TCI state value.

### Example 8:

The system predefines a correspondence between a downlink PDCCH resource and an uplink PUCCH resource or a PUSCH resource related to TCI (corresponding to the first correspondence). For example, (1) the system predefines the association relationship that PDCCH resources and PUCCH resource scheduled by the PDCCH resources uses the same TCI state (value indication). That is, if the CORESET where the PDCCH resource is located is configured with the first downlink TCI state (value) indicated, the PUCCH resource scheduled by the PDCCH resource uses the indicated first uplink TCI state. If the base station indicates two downlink TCI states (values) and two uplink TCI states, respectively denoted as DL (downlink)-TCI-state9 and DL-TCI-state23, UL (uplink)-TCI-state5 and UL-TCI-state17, if CORESET # 1 is configured to use the first downlink TCI state (value), CORESET # 1 performs transmission using DL-TCI-state 9. According to the predefined rule, correspondence between the PUCCH and the TCI state (value) needs not to be configured: in this case, the PUCCH scheduled by the PDCCH and carried in the CORESET # 1 also follows that the CORESET # 1 used the TCI, and uses the first uplink TCI state (value), i.e., the PUCCH is transmitted with the UL-TCI-State 5. If the base station indicates two TCI states (values), which are joint TCIs and are not distinguished whether they are uplink or downlink, the PDCCH resource and the PUCCH resource scheduled by the PDCCH resources use the same TCI state (value indication). For example, the base station indicates TCI-State 5 and TCI-State 7, and the CORESET # 1 is configured to use the first TCI state (value), that is, TCI-State 5; the PUCCH scheduled by the PDCCH carried in CORESET # 1 also uses the first TCI state, that is, TCI-State 5 for transmission. Similarly, TCI states (values) for PUSCH transmission may also be determined similarly, and details are not described herein again.

In another implementation, if the base station indicates a plurality of TCI states (values), for example, two downlink TCI states (values) and two uplink TCI states, the system predefines an association relationship among the plurality of TCI states (values). For example, 1) the system predefines that the first downlink TCI state (value) and the first uplink TCI state are used in combination, and the second downlink TCI state and the second uplink TCI state are used in combination. In this case, for the PDCCH, when it is configured to use the first downlink TCI state (value), the PUCCH or PUSCH scheduled by the PDCCH is transmitted according to the first uplink TCI state (value) associated with the first downlink TCI state. For example, the base station indicates two downlink TCI states and two uplink TCI states, which are respectively denoted as DL-TCI-state 9 and DL-TCI-state 23, UL-TCI-state 5 and UL-TCI-state 17. 2) the system predefines that the first downlink TCI state (value) and the first uplink TCI state (value) are used in combination, and the second downlink TCI state (value) and the second uplink TCI state (value) are used in combination, that is, the DL-TCI-state 9 is associated with the UL-TCI-state 5, and the DL-TCI-state 23 is associated with the UL-TCI-state 17. In this case, if the CORESET # 1 is transmitted using the DL-TCI-State 9, the PUCCH scheduled by the PDCCH carried by the CORESET # 1 is transmitted using the UL-TCI-State 5.

### Example 9:

In this example, for "determining a beam direction corresponding to at least one resource or at least one resource group according to second predefined information; performing uplink transmission and/or downlink transmission of the determined resource or resource group according to the beam direction; the second predefined information comprises: at least one of a beam direction of a synchronization signal block (SSB) determined when a terminal performs cell access, a beam direction of a physical uplink shared channel (PUSCH), or a predefined TCI state value", as follows:
In a transmission mode of a multi-TRP (multiple transmission points) based on M-DCI, a base station (corresponding to the network device) configures a CORESET pool index (control resource set pool index) parameter for the terminal. CORESET pool index 0 corresponds to one TRP (transmission point), and CORESET pool index 1 corresponds to another TRP. One MAC-CE signaling activates a set of TCI states for CORESET Pool Index 0 and indicates one of the TCI states using DCI; the other MAC-CE signaling activates a set of TCI states for CORESET Pool Index 1 and indicates one of the TCI states using another DCI. After the base station configures the TCI state by using the RRC, and before the DCI performs the TCI state indication, because there is no indication of the TCI state, a default beam between the UE and the TRP needs to be determined for uplink and downlink transmission. One of the following manners may be used:
Manner 1: Single TRP transmission is used. For a multi-TRP transmission scenario between cells, only the serving cell TRP performs transmission. In this case, the beam direction of the SSB in the downlink transmission in the serving cell access procedure is used as the default beam direction for downlink transmission; and the beam direction used by the scheduled PUSCH transmission when accessing the serving cell is used for uplink transmission.

For a multi-TRP transmission scenario in a cell, a TRP corresponding to only one CORESET pool index value may be configured by default for transmission; for example, a TRP with only CORESET pool index 0 is used for transmission. The downlink transmission corresponding to the CORESET pool index 0 is transmitted by using the beam direction of the SSB in the serving cell access procedure as the default beam direction; and the uplink transmission corresponding to the CORESET pool index 0 is transmitted by using the beam direction used by the scheduled PUSCH transmission during serving cell access.

Manner 2: Multi-TRP transmission is used. For a multi-TRP transmission scenario among cells and for a serving cell, a beam direction of an SSB in a serving cell access procedure is used as a default beam direction for downlink transmission; and a beam direction used by the scheduled PUSCH transmission when accessing the serving cell is used for uplink transmission. A TRP of a non-serving cell may employ a predefined TCI state. One way is to use the TCI state with the smallest ID (identifier) in the TCI state pool configured by the RRC, or adopt the TCI state corresponding to the lowest code point in the MAC-CE activation signaling.

For a multi-TRP transmission scenario in a cell, the system may predefine transmission of TRPs corresponding to two CORESET pool index values. For example, the TRP corresponding to the CORESET pool index 0 uses the beam direction of the SSB in the serving cell access procedure as the default beam direction for downlink transmission; and uses the beam direction used by the scheduled PUSCH transmission in the service cell access procedure for uplink transmission. The TRP corresponding to the CORESET pool index 1 adopts a predefined TCI state: one mode is to used the TCI state with the smallest ID in the TCI state pool configured by using the RRC, or the TCI state corresponding to the lowest code point in the MAC-CE activation signaling.

Manner 3: Multi-TRP transmission is adopted, and the system predefines a default TCI state pair, and the TCI state pair ensures that the terminal can receive the transmissions of the two TRPs at the same time. A predefined manner may be: two TCI states with the smallest IDs in the TCI state pool configured by RRC are used; or two TCI states with the smallest IDs in the TCI state activated by the MAC-CE signaling are used; or the TCI states corresponding to the lowest one or two code points in the MAC-CE activation signaling are used.

### Example 10:

For transmission of a PDSCH (a physical downlink shared channel) and a PUSCH and a grant-free type (type) 2 CG (configured grant) PUSCH, DCI is required to perform scheduling indication. The DCI is carried by a PDCCH (a physical downlink control channel) transmitted on a CORESET. The CORESET may be configured to use the TCI state indicated by the base station in any one of Examples 1-8, or may be configured to not use the TCI state indicated by the base station described in Examples 1-8. When the CORESET is configured to use the TCI state indicated by the base station as described in any one of Examples 1-8, the PDSCH, the PUSCH, and/or the Type 2 CG PUSCH may be transmitted by using the TCI state which is same as that for the CORESET where the PDCCH scheduling the PDSCH, the PUSCH, and/or Type 2 CG PUSCH is located. For example, DCI format 0_1 and/or 0_2 transmitted in CORESET 1 schedules transmission of a PUSCH, and CORESET 1 is configured to use one of two TCI states indicated in any one of Examples 1-8; and then the PUSCH will also use this TCI state for uplink transmission.

When the CORESET is configured to not use the TCI state indicated by the base station described in Examples 1-8, the PDSCH, the PUSCH, and/or the Type 2 CG PUSCH is no longer transmitted by using the same TCI state as that for this CORESET. In this case, the TCI state corresponding to the CORESET pool index (corresponding to the CORESET where the PDCCH is located) may be used. For example, the CORESET corresponds to the CORESET Pool Index 0, and the base station indicates the TCI state corresponding to the CORESET Pool Index 0 through the MAC-CE or the DCI; the PDSCH, the PUSCH, and/or the Type 2 CG PUSCH all use the indicated TCI state.

In another manner, the PDSCH, the PUSCH, and/or the Type 2 CG PUSCH all use the TCI state indicated in the scheduled PDCCH. For example, the PDCCH format 1_1 and/or 1_2 in the CORESET indicates one TCI state; then the PDSCH, PUSCH and/or Type 2 CG PUSCH scheduled by the PDCCH transmitted in the CORESET all use the TCI state indicated by the PDCCH format 1_1 and/or 1_2.

Here, the (serving) cell access in the present disclosure refers to (serving) cell access performed by the terminal, but is not limited thereto.

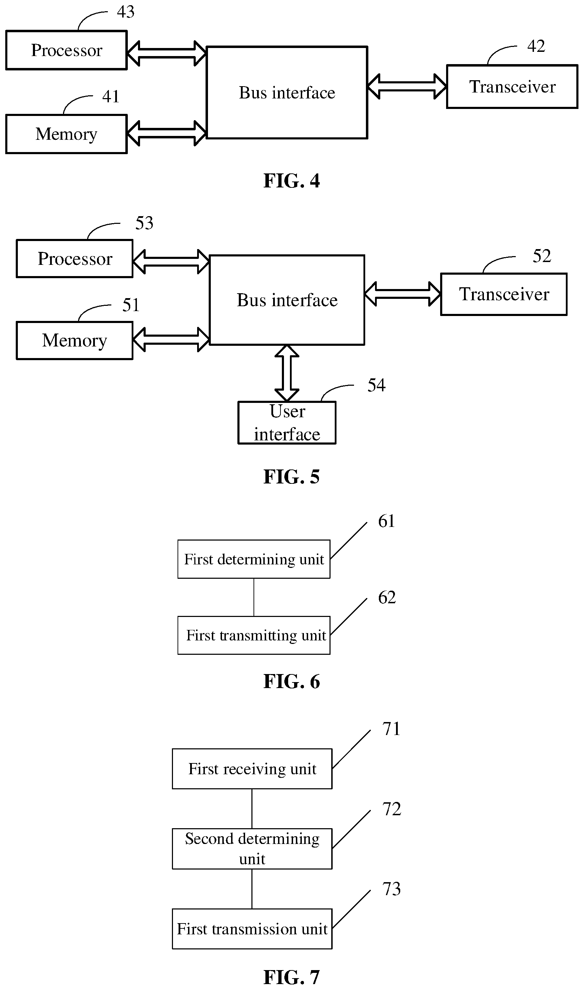

An embodiment of the present disclosure further provides a network device, as shown in FIG. 4, including a memory 41, a transceiver 42, and a processor 43.

the memory 41 is configured to store a computer program; the transceiver 42 is configured to transmit and receive data under the control of the processor 43; and the processor 43 is configured to read the computer program in the memory 41 and perform the following operations:
determining at least one TCI state value corresponding to at least one resource or at least one resource group; transmitting first information to a terminal through the transceiver 42 according to the at least one TCI state value.

The first information includes first indication signaling;
The first indication signaling is configured to indicate a TCI state value used by a resource or a resource group.

The network device provided in the embodiments of the present disclosure determines at least one TCI state value corresponding to at least one resource or at least one resource group; transmits first information to a terminal according to the at least one TCI state value, where the first information includes first indication signaling, and the first indication signaling is configured to indicate a TCI state value used by a resource or a resource group; and can support implementing TRP transmission based on at least one TCI state, can specifically support multi-TRP transmission, and well solves the problem in the related art that an information transmission scheme for multi-TRP transmission cannot be supported.

Specifically, the transceiver 42 is configured to receive and transmit data under the control of the processor 43.

In FIG. 4, the bus architecture may include any number of interconnected buses and bridges, and specifically, various circuits of one or more processors represented by the processor 43 and a memory represented by the memory 41 are linked together. The bus architecture may also link various other circuits, such as a peripheral device, a voltage regulator, and a power management circuit, which are well known in the art, and therefore are not further described herein. The bus interface provides an interface. The transceiver 42 may be a plurality of elements, including a transmitter and a receiver, and provides units for communicating with various other apparatuses on a transmission medium, where the transmission mediums include transmission media such as a wireless channel, a wired channel, and an optical cable. The processor 43 is responsible for managing the bus architecture and general processing, and the memory 41 may store data used by the processor 43 when performing operations.

The processor 43 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor is configured to invoke the computer program stored in the memory, to perform any one of the methods provided in the embodiments of the present disclosure according to the obtained executable instruction. The processor and the memory may also be physically separated.

The determining at least one TCI state value corresponding to the at least one resource or the at least one resource group includes: configuring at least one TCI state value corresponding to the at least one resource or resource group; or determining, based on the first predefined information, at least one TCI state value corresponding to the at least one resource or the at least one resource group.

In this embodiment of the present disclosure, the first predefined information includes at least one of following: a correspondence between one resource and another resource; or a correspondence between one resource group and another resource group; or correspondence between one TCI state value indication and another TCI state value indication in the TCI state information; or a correspondence between the resource or the resource group and the TCI state information; or a correspondence between a first parameter identifier and TCI state information; or a correspondence between the resource or the resource group and the first parameter identifier, where the first parameter identifier is configured to identify a resource or a resource group.

Further, the first information further includes a first correspondence, or the first indication signaling carries a first correspondence, where the first correspondence includes at least one of a correspondence between a resource or a resource group and TCI state information, a correspondence between a first parameter identifier and TCI state information, or a correspondence between a resource or a resource group and a first parameter identifier, and the first parameter identifier is configured to identify a resource or a resource group.

The correspondence between the resource or the resource group and the TCI state information includes: first sub-relationship between the resource or the resource group and a TCI state value indication; and/or the correspondence between a first parameter identifier and TCI state information includes: second sub-relationship between the first parameter identifier and a TCI state value indication, where the TCI state value indication is configured to identify the TCI state information.

Further, the operation further includes: determining a beam direction corresponding to the at least one resource or the at least resource group according to the second predefined information.

The second predefined information includes at least one of a beam direction of a synchronization signal block (SSB) determined when a terminal performs cell access, a beam direction of a physical uplink shared channel (PUSCH), or a predefined TCI state value.

Further, the operations further include: determining a resource or resource group corresponding to at least one predefined control resource set CORESET group index; and performing uplink transmission and/or downlink transmission of the determined resource or resource group according to the beam direction.

The first parameter identifier includes at least one of a control resource set CORESET group index, a CORESET index, a sounding reference signal SRS resource set index, a physical uplink shared channel PUSCH transmission occasion, or a maximum antenna port number index of a panel.

In the embodiments of the present disclosure, transmitting the first correspondence to the terminal includes at least one of following: transmitting TCI state information indicated or configured for at least one resource or at least one resource group to the terminal; or transmitting, to the terminal, a resource or resource group or a first parameter identifier corresponding to the TCI state information; or indicating, to the terminal by using the resource scheduling signaling, TCI state information corresponding to the scheduled resource.

The TCI state information includes at least one TCI state value indication.

In an embodiment of the present disclosure, the first indication signaling includes at least one transmission point TRP information field, where the TRP information field is configured to indicate at least one of a single-TRP transmission or multi-TRP transmission or a TCI state value indication used during single-TRP transmission.

The TRP information field is configured to indicate all of channels and/or signals, or is configured to indicate a part of channels and/or signals.

In an embodiment of the present disclosure, the first indication signaling includes an indication field of at least one TCI state value.

The resource includes at least one of a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of a CORESET group, a PDCCH group, a PUCCH group, a CSI-RS group, or an SRS group.

It should be noted that, the above-mentioned network device provided in the embodiments of the present disclosure can implement all method steps implemented by the above-mentioned network device side method embodiment, and can achieve the same technical effect, which will not be repeated here for the same parts and beneficial effects as the method embodiments in this embodiment.

An embodiment of the present disclosure further provides a terminal, as shown in FIG. 5, including a memory 51, a transceiver 52, and a processor 53.

The memory 51 is configured to store a computer program; the transceiver 52 is configured to transmit and receive data under the control of the processor 53; and the processor 53 is configured to read the computer program in the memory 51 and perform the following operations:
receiving, by the transceiver 52, first information from a network device; and
determining at least one TCI state value corresponding to at least one resource or at least one resource group according to the first information;
performing information transmission according to the at least one TCI state value.

The first information includes first indication signaling.

The first indication signaling is configured to indicate a TCI state value used by a resource or a resource group.

The terminal provided in the embodiments of the present disclosure receives the first information from the network device; determines at least one TCI state value corresponding to the at least one resource or the at least one resource group according to the first information; performs information transmission according to the at least one TCI state value, where the first information includes first indication signaling, and the first indication signaling is configured to indicate a TCI state value used by a resource or a resource group; and TRP transmission based on at least one TCI state can be supported, specifically, multi-TRP transmission can be supported, and a problem that an information transmission scheme for multi-TRP transmission cannot be supported in the related art is well solved.

Specifically, the transceiver 52 is configured to receive and transmit data under the control of the processor 53.

In FIG. 5, the bus architecture may include any number of interconnected buses and bridges, and specifically, various circuits of one or more processors represented by the processor 53 and a memory represented by the memory 51 are linked together. The bus architecture may also link various other circuits, such as a peripheral device, a voltage regulator, and a power management circuit, which are well known in the art, and therefore are not further described herein. The bus interface provides an interface. The transceiver 52 may be a plurality of elements, including a transmitter and a receiver, and provides units for communicating with various other apparatuses on a transmission medium, where the transmission mediums include transmission media such as a wireless channel, a wired channel, and an optical cable. For different user equipment, the user interface 54 may also be an interface capable of being externally connected to an internal required device, and the connected device includes but is not limited to a keypad, a display, a speaker, a microphone, a joystick, and the like.

The processor 53 is responsible for managing the bus architecture and general processing, and the memory 51 may store data used by the processor 53 when performing operations.

Optionally, the processor 53 may be a Central Processing Unit (CPU), an Application Specific Integrated Circuit (ASIC), a Field-Programmable Gate Array (FPGA), or a Complex Programmable Logic Device (CPLD), and the processor may also use a multi-core architecture.

The processor is configured to invoke the computer program stored in the memory, to perform any one of the methods provided in the embodiments of the present disclosure according to the obtained executable instruction. The processor and the memory may also be physically separated.

The determining, based on the first information, at least one TCI state value corresponding to at least one resource or at least one resource group includes: determining at least one TCI state value corresponding to at least one resource or at least one resource group according to the first information and the first predefined information.

In this embodiment of the present disclosure, the first predefined information includes at least one of following: a correspondence between one resource and another resource; or a correspondence between one resource group and another resource group; or a correspondence between one TCI state value indication and another TCI state value indication in the TCI state information; or a correspondence between the resource or the resource group and the TCI state information; or a correspondence between a first parameter identifier and TCI state information; or a correspondence between the resource or the resource group and the first parameter identifier, where the first parameter identifier is configured to identify a resource or a resource group.

Further, the first information further includes a first correspondence, or the first indication signaling carries a first correspondence, where the first correspondence includes at least one of a correspondence between a resource or a resource group and TCI state information, a correspondence between a first parameter identifier and TCI state information, or a correspondence between a resource or a resource group and a first parameter identifier, and the first parameter identifier is configured to identify a resource or a resource group.

The correspondence between the resource or the resource group and the TCI state information includes: first sub-relationship between the resource or the resource group and a TCI state value indication; and/or the correspondence between a first parameter identifier and TCI state information includes: second sub-relationship between the first parameter identifier and a TCI state value indication, where the TCI state value indication is configured to identify the TCI state information.

Further, the operation further includes: determining a beam direction corresponding to the at least one resource or the at least resource group according to the second predefined information.

The second predefined information includes at least one of a beam direction of a synchronization signal block (SSB) determined when a terminal performs cell access, a beam direction of a physical uplink shared channel (PUSCH), or a predefined TCI state value.

Further, the operations further include: determining a resource or resource group corresponding to at least one predefined control resource set CORESET group index; and performing uplink transmission and/or downlink transmission of the determined resource or resource group according to the beam direction.

The first parameter identifier includes at least one of a control resource set CORESET group index, a CORESET index, a sounding reference signal SRS resource set index, a physical uplink shared channel PUSCH transmission occasion, or a maximum antenna port number index of a panel.

In the embodiments of the present disclosure, receiving the first correspondence from the network device includes at least one of following: receiving TCI state information transmitted from the network device and indicated or configured for at least one resource or at least one resource group; or receiving a resource or resource group or a first parameter identifier corresponding to the TCI state information and transmitted from the network device; or receiving TCI state information corresponding to the scheduled resource and indicated by the network device through the resource scheduling signaling.

The TCI state information includes at least one TCI state value indication.

In an embodiment of the present disclosure, the first indication signaling includes at least one transmission point TRP information field, where the TRP information field is configured to indicate at least one of a single-TRP transmission or multi-TRP transmission or a TCI state value indication used during single-TRP transmission.

The TRP information field is configured to indicate all of channels and/or signals, or is configured to indicate a part of channels and/or signals.

In an embodiment of the present disclosure, the first indication signaling includes an indication field of at least one TCI state value.

The resource includes at least one of a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of a CORESET group, a PDCCH group, a PUCCH group, a CSI-RS group, or an SRS group.

It should be noted that the above-mentioned terminal provided in the embodiments of the present disclosure can implement all method steps implemented by the above-mentioned terminal side method embodiment, and can achieve the same technical effect, which will not be specifically described in detail in this embodiment and some of the beneficial effects that are the same as those in the method embodiment.

An embodiment of the present disclosure further provides an information transmission apparatus, applied to a network device, as shown in FIG. 6, including:
a first determining unit 61, configured to determine at least one TCI state value corresponding to at least one resource or at least one resource group; and
a first transmitting unit 62, configured to transmit first information to a terminal according to the at least one TCI state value.

The first information includes first indication signaling;
The first indication signaling is configured to indicate a TCI state value used by a resource or a resource group.

The information transmission apparatus provided in the embodiments of the present disclosure determines at least one TCI state value corresponding to at least one resource or at least one resource group; transmits first information to a terminal according to the at least one TCI state value, where the first information includes first indication signaling, and the first indication signaling is configured to indicate a TCI state value used by a resource or a resource group; and can support implementing TRP transmission based on at least one TCI state, can specifically support multi-TRP transmission, and well solves the problem in the related art that an information transmission scheme for multi-TRP transmission cannot be supported.

The determining at least one TCI state value corresponding to the at least one resource or the at least one resource group includes: configuring at least one TCI state value corresponding to the at least one resource or resource group; or determining, based on the first predefined information, at least one TCI state value corresponding to the at least one resource or the at least one resource group.

In this embodiment of the present disclosure, the first predefined information includes at least one of following: a correspondence between one resource and another resource; or a correspondence between one resource group and another resource group; or one TCI state value in TCI state information indicates a correspondence between one TCI state value and another TCI state value in the TCI state information; or a correspondence between the resource or the resource group and the TCI state information; or a correspondence between a first parameter identifier and TCI state information; or a correspondence between the resource or the resource group and the first parameter identifier, where the first parameter identifier is configured to identify a resource or a resource group.

Further, the first information further includes a first correspondence, or the first indication signaling carries a first correspondence, where the first correspondence includes at least one of a correspondence between a resource or a resource group and TCI state information, a correspondence between a first parameter identifier and TCI state information, or a correspondence between a resource or a resource group and a first parameter identifier, and the first parameter identifier is configured to identify a resource or a resource group.

The correspondence between the resource or the resource group and the TCI state information includes: first sub-relationship between the resource or the resource group and a TCI state value indication; and/or the correspondence between a first parameter identifier and TCI state information includes: second sub-relationship between the first parameter identifier and a TCI state value indication, where the TCI state value indication is configured to identify the TCI state information.

Further, the information transmission apparatus further includes: a third determining unit, configured to determine, based on second predefined information, a beam direction corresponding to at least one resource or resource group.

The second predefined information includes at least one of a beam direction of a synchronization signal block (SSB) determined when a terminal performs cell access, a beam direction of a physical uplink shared channel (PUSCH), or a predefined TCI state value.

Further, the information transmission apparatus further includes: a fourth determining unit, configured to determine a resource or resource group corresponding to at least one predefined control resource set CORESET group index; and a second transmission unit, configured to perform uplink transmission and/or downlink transmission of the determined resource or resource group according to the beam direction.

The first parameter identifier includes at least one of a control resource set CORESET group index, a CORESET index, a sounding reference signal SRS resource set index, a physical uplink shared channel PUSCH transmission occasion, or a maximum antenna port number index of a panel.

In the embodiments of the present disclosure, transmitting the first correspondence to the terminal includes at least one of following: transmitting TCI state information indicated or configured for at least one resource or at least one resource group to the terminal; or transmitting, to the terminal, a resource or resource group or a first parameter identifier corresponding to the TCI state information; or indicating, to the terminal by using the resource scheduling signaling, TCI state information corresponding to the scheduled resource.

The TCI state information includes at least one TCI state value indication.

In an embodiment of the present disclosure, the first indication signaling includes at least one transmission point TRP information field, where the TRP information field is configured to indicate at least one of a single-TRP transmission or multi-TRP transmission or a TCI state value indication used during single-TRP transmission.

The TRP information field is configured to indicate all of channels and/or signals, or is configured to indicate a part of channels and/or signals.

In an embodiment of the present disclosure, the first indication signaling includes an indication field of at least one TCI state value.

The resource includes at least one of a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of a CORESET group, a PDCCH group, a PUCCH group, a CSI-RS group, or an SRS group.

It should be noted that, the above apparatus provided in the embodiments of the present disclosure can implement all method steps implemented by the foregoing network device side method embodiment, and can achieve the same technical effect, and details of the same parts and beneficial effects as those in the method embodiments in this embodiment are not described herein again.

An embodiment of the present disclosure further provides an information transmission apparatus, applied to a terminal, as shown in FIG. 7, including:
a first receiving unit 71, configured to receive first information from a network device; and
a second determining unit 72, configured to determine at least one TCI state value corresponding to at least one resource or at least one resource group according to the first information; and
a first transmission unit 73, configured to perform information transmission according to the at least one TCI state value.

The first information includes first indication signaling;
The first indication signaling is configured to indicate a TCI state value used by a resource or a resource group.

The information transmission apparatus provided in the embodiments of the present disclosure receives the first information from the network device; determines at least one TCI state value corresponding to the at least one resource or the at least one resource group according to the first information; performs information transmission is performed according to the at least one TCI state value, where the first information includes first indication signaling, and the first indication signaling is configured to indicate a TCI state value used by a resource or a resource group; and TRP transmission based on at least one TCI state can be supported, specifically, multi-TRP transmission can be supported, and a problem that an information transmission scheme for multi-TRP transmission cannot be supported in the related art is well solved.

The determining, based on the first information, at least one TCI state value corresponding to at least one resource or at least one resource group includes: determining at least one TCI state value corresponding to at least one resource or at least one resource group according to the first information and the first predefined information.

In this embodiment of the present disclosure, the first predefined information includes at least one of following: a correspondence between one resource and another resource; or a correspondence between one resource group and another resource group; or a correspondence between one TCI state value indication and another TCI state value indication in the TCI state information; or a correspondence between the resource or the resource group and the TCI state information; or a correspondence between a first parameter identifier and TCI state information; or a correspondence between the resource or the resource group and the first parameter identifier, where the first parameter identifier is configured to identify a resource or a resource group.

Further, the first information further includes a first correspondence, or the first indication signaling carries a first correspondence, where the first correspondence includes at least one of a correspondence between a resource or a resource group and TCI state information, a correspondence between a first parameter identifier and TCI state information, or a correspondence between a resource or a resource group and a first parameter identifier, and the first parameter identifier is configured to identify a resource or a resource group.

The correspondence between the resource or the resource group and the TCI state information includes: first sub-relationship between the resource or the resource group and a TCI state value indication; and/or the correspondence between a first parameter identifier and TCI state information includes: second sub-relationship between the first parameter identifier and a TCI state value indication, where the TCI state value indication is configured to identify the TCI state information.

Further, the information transmission apparatus further includes: a fifth determining unit, configured to determine a beam direction corresponding to the at least one resource or the at least one resource group according to the second predefined information.

The second predefined information includes at least one of a beam direction of a synchronization signal block (SSB) determined when a terminal performs cell access, a beam direction of a physical uplink shared channel (PUSCH), or a predefined TCI state value.

Further, the information transmission apparatus further includes: a sixth determining unit, configured to determine a resource or resource group corresponding to at least one predefined control resource set CORESET group index; and a third transmission unit, configured to perform uplink transmission and/or downlink transmission of the determined resource or resource group according to the beam direction.

The first parameter identifier includes at least one of a control resource set CORESET group index, a CORESET index, a sounding reference signal SRS resource set index, a physical uplink shared channel PUSCH transmission occasion, or a maximum antenna port number index of a panel.

In the embodiments of the present disclosure, receiving the first correspondence from the network device includes at least one of following: receiving TCI state information transmitted from the network device and indicated or configured for at least one resource or at least one resource group; or receiving a resource or resource group or a first parameter identifier corresponding to the TCI state information and transmitted from the network device; or receiving TCI state information corresponding to the scheduled resource and indicated by the network device through the resource scheduling signaling.

The TCI state information includes at least one TCI state value indication.

In an embodiment of the present disclosure, the first indication signaling includes at least one transmission point TRP information field, where the TRP information field is configured to indicate at least one of a single-TRP transmission or multi-TRP transmission or a TCI state value indication used during single-TRP transmission.

The TRP information field is configured to indicate all of channels and/or signals, or is configured to indicate a part of channels and/or signals.

In an embodiment of the present disclosure, the first indication signaling includes an indication field of at least one TCI state value.

The resource includes at least one of a CORESET, a physical downlink control channel (PDCCH), a physical downlink shared channel (PDSCH), a physical uplink control channel (PUCCH), a PUSCH, a channel state information reference signal (CSI-RS), or an SRS; and/or the resource group includes at least one of a CORESET group, a PDCCH group, a PUCCH group, a CSI-RS group, or an SRS group.

It should be noted that, the above apparatus provided in the embodiments of the present disclosure can implement all method steps implemented by the above terminal side method embodiment, and can achieve the same technical effect, which will not be repeated here for the same parts and beneficial effects as the method embodiments in this embodiment.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

An embodiment of the present disclosure further provides a processor-readable storage medium, where the processor-readable storage medium stores a computer program, and the computer program is configured to cause the processor to perform the information transmission method on the network device side; or the processor-readable storage medium stores a computer program, and the computer program is configured to cause the processor to perform the information transmission method on the terminal side.

The processor-readable storage medium may be any usable medium or data storage device accessible by a processor, including but not limited to a magnetic memory (for example, a floppy disk, a hard disk, a magnetic tape, a magneto-optical disk (MO), etc.), an optical memory (for example, a compact disk (CD), a digital versatile disk (DVD), a Blu-ray disk (BD), a high-definition versatile disk (HVD), etc.), and a semiconductor memory (for example, a ROM, Erasable Programmable Read Only Memory (EPROM), Electrically EPROM (EEPROM), Non-Volatile Memory (NAND Flash), Solid State Disk or Solid State Drive, SSD), etc.

The implementation embodiments of the information transmission method at the network device side or the terminal side are all applicable to the embodiments of the processor-readable storage medium, and can also achieve the same technical effect.

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

It should be noted that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, a module may be a separately established processing element, or may be integrated in a chip of the foregoing apparatus, or may be stored in a memory of the apparatus in a form of program code, and a processing element of the foregoing apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. An information transmission method applied to a network device, comprising:
determining at least one TCI state value corresponding to at least one resource or at least one resource group; and
transmitting first information to a terminal according to the at least one TCI state value; wherein
the first information comprises first indication signaling; the first indication signaling is configured to indicate a TCI state value used by a resource or a resource group.

2. The information transmission method according to claim 1, wherein the determining at least one TCI state value corresponding to at least one resource or at least one resource group comprises:
configuring the at least one TCI state value corresponding to the at least one resource or the at least one resource group; or
determining the at least one TCI state value corresponding to the at least one resource or the at least one resource group according to first predefined information.

3. The information transmission method according to claim 2, wherein the first predefined information comprises at least one of following:
a correspondence between one resource and another resource; or
a correspondence between one resource group and another resource group; or
a correspondence between one TCI state value indication and another TCI state value indication in TCI state information; or
a correspondence between a resource or a resource group and TCI state information; or
a correspondence between a first parameter identifier and TCI state information; or
a correspondence between a resource or a resource group and a first parameter identifier;
wherein the first parameter identifier is configured to identify a resource or a resource group.

4. The information transmission method according to claim 1, wherein the first information further comprises a first correspondence, or the first indication signaling carries a first correspondence;
wherein the first correspondence comprises at least one of:
a correspondence between a resource or a resource group and TCI state information, a correspondence between a first parameter identifier and TCI state information, or a correspondence between a resource or a resource group and a first parameter identifier;
the first parameter identifier is configured to identify a resource or a resource group.

5. The information transmission method according to claim 4, wherein the correspondence between the resource or the resource group and the TCI state information comprises: first sub-relationship between the resource or the resource group and the TCI state value indication;
and/or
the correspondence between the first parameter identifier and the TCI state information comprises: second sub-relationship between the first parameter identifier and a TCI state value indication;
wherein the TCI state value indication is configured to identify the TCI state information.

6. The information transmission method according to claim 1, further comprising:
determining a beam direction corresponding to the at least one resource or the at least resource group based on second predefined information.

7. The information transmission method according to claim 6, wherein the second predefined information comprises at least one of:
a beam direction of a synchronization signal block (SSB) determined when a terminal performs cell access, a beam direction of a physical uplink shared channel (PUSCH), or a predefined TCI state value.

8. The information transmission method according to claim 6 or 7, further comprising:
determining a resource or resource group corresponding to at least one predefined control resource set CORESET group index;
performing uplink transmission and/or downlink transmission of the determined resource or resource group according to the beam direction.

9. The information transmission method according to claim 3 or 4, wherein the first parameter identifier comprises at least one of:
a control resource set CORESET group index, a CORESET index, a sounding reference signal SRS resource set index, a physical uplink shared channel PUSCH transmission occasion, or a maximum antenna port number index of a panel.

10. The information transmission method according to claim 4, wherein transmitting the first correspondence to the terminal comprises at least one of following:
transmitting TCI state information indicated or configured for at least one resource or at least one resource group to the terminal; or
transmitting a resource or resource group or a first parameter identifier corresponding to the TCI state information to the terminal; or
indicating the TCI state information corresponding to a scheduled resource to the terminal through a resource scheduling signaling.

11. The information transmission method according to claim 4, wherein the TCI state information comprises at least one TCI state value indication.

12. The information transmission method according to claim 1, wherein the first indication signaling comprises: at least one transmission reception point TRP information field;
the TRP information field is configured to indicate at least one of:
single-TRP transmission or multi-TRP transmission, or a TCI state value indication used during single-TRP transmission.

13. The information transmission method according to claim 12, wherein the TRP information field is configured to indicate all of channels and/or signals, or indicate a part of channels and/or signals.

14. The information transmission method according to claim 1, wherein the first indication signaling comprises an indication field of at least one TCI state value.

15. The information transmission method according to claim 1, wherein the resource comprises at least one of following: a CORESET, a physical downlink control channel (PDCCH), a physical downlink shared channel (PDSCH), a physical uplink control channel (PUCCH), a PUSCH, a channel state information reference signal (CSI-RS), or an SRS; and/or
the resource group comprises at least one of following: CORESET grouping, PDCCH grouping, PUCCH grouping, CSI-RS grouping, or SRS grouping.

16. An information transmission method applied to a terminal, comprising:
receiving first information from a network device;
determining at least one TCI state value corresponding to at least one resource or at least one resource group according to the first information; and
performing information transmission according to the at least one TCI state value;
wherein the first information comprises first indication signaling; the first indication signaling is configured to indicate a TCI state value used by a resource or a resource group.

17. The information transmission method according to claim 16, wherein determining the at least one TCI state value corresponding to the at least one resource or the at least one resource group according to the first information comprises:
determining the at least one TCI state value corresponding to the at least one resource or the at least one resource group according to the first information and first predefined information.

18. The information transmission method according to claim 17, wherein the first predefined information comprises at least one of following:
a correspondence between one resource and another resource; or
a correspondence between one resource group and another resource group; or
a correspondence between one TCI state value indication and another TCI state value indication in TCI state information; or
a correspondence between a resource or a resource group and TCI state information; or
a correspondence between a first parameter identifier and TCI state information; or
a correspondence between a resource or a resource group and a first parameter identifier;
wherein the first parameter identifier is configured to identify a resource or a resource group.

19. The information transmission method according to claim 16, wherein the first information further comprises a first correspondence, or the first indication signaling carries a first correspondence;
wherein the first correspondence comprises at least one of:
a correspondence between a resource or a resource group and TCI state information, a correspondence between a first parameter identifier and TCI state information, or a correspondence between a resource or a resource group and a first parameter identifier;
the first parameter identifier is configured to identify a resource or a resource group.

20. The information transmission method according to claim 19, wherein the correspondence between the resource or the resource group and the TCI state information comprises: first sub-relationship between the resource or the resource group and the TCI state value indication;
and/or
the correspondence between the first parameter identifier and the TCI state information comprises: second sub-relationship between the first parameter identifier and a TCI state value indication;
wherein the TCI state value indication is configured to identify the TCI state information.

21. The information transmission method according to claim 16, further comprising:
determining a beam direction corresponding to the at least one resource or the at least resource group based on second predefined information.

22. The information transmission method according to claim 21, wherein the second predefined information comprises at least one of:
a beam direction of a synchronization signal block (SSB) determined when a terminal performs cell access, a beam direction of a physical uplink shared channel (PUSCH), or a predefined TCI state value..

23. The information transmission method according to claim 21 or 22, further comprising:
determining a resource or resource group corresponding to at least one predefined control resource set CORESET group index;
performing uplink transmission and/or downlink transmission of the determined resource or resource group according to the beam direction.

24. The information transmission method according to claim 18 or 19, wherein the first parameter identifier comprises at least one of:
a control resource set CORESET group index, a CORESET index, a sounding reference signal SRS resource set index, a physical uplink shared channel PUSCH transmission occasion, or a maximum antenna port number index of a panel.

25. The information transmission method according to claim 19, wherein receiving the first correspondence from the network device comprises at least one of following:
receiving TCI state information that is from a network device and is indicated or configured for at least one resource or at least one resource group; or
receiving, from the network device, TCI state information indicated or configured for at least one resource or at least one resource group; or
receiving, from the network device, a resource or resource group or a first parameter identifier corresponding to the TCI state information; or
receiving, from the network device, the TCI state information corresponding to a scheduled resource through a resource scheduling signaling.

26. The information transmission method according to claim 19, wherein the TCI state information comprises at least one TCI state value indication.

27. The information transmission method according to claim 16, wherein the first indication signaling comprises: at least one transmission reception point TRP information field;
the TRP information field is configured to indicate at least one of:
single-TRP transmission or multi-TRP transmission, or a TCI state value indication used during single-TRP transmission.

28. The information transmission method according to claim 27, wherein the TRP information field is configured to indicate all of channels and/or signals, or indicate a part of channels and/or signals.

29. The information transmission method according to claim 16, wherein the first indication signaling comprises an indication field of at least one TCI state value.

30. The information transmission method according to claim 16, wherein the resource comprises at least one of following: a CORESET, a physical downlink control channel (PDCCH), a physical downlink shared channel (PDSCH), a physical uplink control channel (PUCCH), a PUSCH, a channel state information reference signal (CSI-RS), or an SRS; and/or
the resource group comprises at least one of following: CORESET grouping, PDCCH grouping, PUCCH grouping, CSI-RS grouping, or SRS grouping.

31. A network device, comprising:
a memory, a transceiver, and a processor,
wherein the memory is configured to store a computer program; the transceiver is configured to transmit and receive data under the control of the processor; and the processor is configured to read the computer program in the memory and perform the following operations:
determining at least one TCI state value corresponding to at least one resource or at least one resource group;
transmitting first information to a terminal through the transceiver according to the at least one TCI state value; wherein
the first information comprises first indication signaling; the first indication signaling is configured to indicate a TCI state value used by a resource or a resource group.

32. A terminal, comprising:
a memory, a transceiver, and a processor:
wherein the memory is configured to store a computer program; the transceiver is configured to transmit and receive data under the control of the processor; and the processor is configured to read the computer program in the memory and perform the following operations:
receiving first information from a network device through the transceiver;
determining at least one TCI state value corresponding to at least one resource or at least one resource group according to the first information;
performing information transmission according to the at least one TCI state value;
wherein the first information comprises first indication signaling; the first indication signaling is configured to indicate a TCI state value used by a resource or a resource group.

33. An information transmission apparatus applied to a network device, comprising:
a first determining unit, configured to determine at least one TCI state value corresponding to at least one resource or at least one resource group;
a first transmitting unit, configured to transmit first information to a terminal according to the at least one TCI state value;
wherein the first information comprises first indication signaling; the first indication signaling is configured to indicate a TCI state value used by a resource or a resource group.

34. An information transmission apparatus applied to a terminal, comprising:
a first receiving unit, configured to receive first information from a network device;
a second determining unit, configured to determine at least one TCI state value corresponding to at least one resource or at least one resource group according to the first information;
a first transmission unit, configured to perform information transmission according to the at least one TCI state value;
wherein the first information comprises first indication signaling; the first indication signaling is configured to indicate a TCI state value used by a resource or a resource group.

35. A processor-readable storage medium, wherein the processor-readable storage medium stores a computer program, and the computer program is configured to cause a processor to perform the information transmission method according to any one of claims 1 to 15; or
the processor-readable storage medium stores a computer program, and the computer program is configured to cause a processor to perform the information transmission method according to any one of claims 16 to 30.
